# FASCICULE DE BREVET EUROPEEN

(11) **EP 3 198 876 B1**
(45) Date de publication et mention de la délivrance du brevet: **22.05.2019**
(21) Numéro de dépôt: 15778371.3
(22) Date de dépôt: 21.09.2015
(51) Int. Cl.: H04N 19/597, H04N 13/00, H04N 19/147, H04N 19/172, H04N 19/102, H04N 19/124

(54) **GÉNÉRATION ET CODAGE D'IMAGES INTÉGRALES RÉSIDUELLES**
ERZEUGUNG UND CODIERUNG VON INTEGRALEN RESTBILDERN
GENERATION AND ENCODING OF RESIDUAL INTEGRAL IMAGES

(30) Priorité: 22.09.2014 FR 1458918
(43) Date de publication de la demande: 02.08.2017
(73) Titulaire: Orange, 75015 Paris (FR)
(72) Inventeur: JUNG, Joël, 78320 Le Mesnil Saint Denis (FR); DRICOT, Antoine, 75014 Paris (FR)
(86) Numéro de dépôt international: PCT/FR2015/052525
(87) Numéro de publication internationale: WO 2016/046483

(56) Documents cités:
- WO-A1-2012/150407
- US-B1- 6 476 805
- CHEOL-HWA YOO ET AL: "Enhanced compression of integral images by combined use of residual images and MPEG-4 algorithm in three-dimensional integral imaging", OPTICS COMMUNICATIONS, NORTH-HOLLAND PUBLISHING CO. AMSTERDAM, NL, vol. 284, no. 20, 13 juin 2011 (2011-06-13), pages 4884-4893, XP028258970, ISSN: 0030-4018, DOI: 10.1016/J.OPTCOM.2011.06.020 [extrait le 2011-06-24]
- AGOOUN AMAR ET AL: "Acquisition, processing and coding of 3D holoscopic content for immersive video systems", 2013 3DTV VISION BEYOND DEPTH (3DTV-CON), IEEE, 7 octobre 2013 (2013-10-07), pages 1-4, XP032527561, ISSN: 2161-2021, DOI: 10.1109/3DTV.2013.6676655 [extrait le 2013-11-26]

## Description

### Domaine de l'invention

La présente invention se rapporte de manière générale au domaine du traitement d'images, et plus précisément au codage et au décodage d'images intégrales et de séquences d'images intégrales.

L'invention peut notamment, mais non exclusivement, s'appliquer au codage vidéo mis en oeuvre dans les codeurs vidéo actuels AVC et HEVC et leurs extensions (MVC, 3D-AVC, MV-HEVC, 3D-HEVC, etc), et au décodage vidéo correspondant.

### Art antérieur

L'imagerie intégrale est une technique consistant à représenter des images en relief. Elle est considérée comme particulièrement prometteuse dans le développement de la télévision 3D, notamment en raison du fait qu'elle propose, non pas une visualisation stéréoscopique des images, mais une parallaxe totale.

Une image intégrale est classiquement composée de différentes images élémentaires appelées également micro-images qui représentent chacune différentes perspectives d'une scène en trois dimensions. Une image intégrale est acquise à l'aide d'un dispositif de capture d'images qui comprend une caméra et un réseau lenticulaire qui est disposé entre la scène en trois dimensions et la caméra.

La compression d'une image intégrale revient ainsi à compresser l'ensemble des micro-images qui la constituent.

Malgré l'attractivité d'une telle technique, des difficultés existent pour implémenter en pratique les systèmes d'imagerie intégrale. Par exemple, dans le cas où certaines applications imposent une résolution élevée de l'image intégrale et un grand nombre de points de vue, il est nécessaire d'augmenter non seulement la taille de chaque micro-image composant cette image intégrale, mais également le nombre de micro-images de cette dernière. Il en résulte une augmentation beaucoup trop importante de la taille de l'image intégrale ainsi constituée. Ainsi, lorsque l'image intégrale doit être codée, il y a un volume élevé d'informations à comprimer et la compression de l'image intégrale est peu performante.

Deux méthodes de codage différentes sont généralement proposées pour comprimer une image intégrale.

La première méthode de codage consiste à appliquer un codage en deux dimensions (2D) à l'image intégrale en tant que telle. A cet effet, les caractéristiques d'un codec 2D classique sont modifiées pour s'adapter à la structure particulière des images intégrales. Selon un premier exemple, dans les documents « Compression of 3D Integral Images Using 3D Wavelet Transform », Aggoun, Journal of Display Technologies, Nov. 2011, ainsi que WO 2013156718 A1, il est proposé de coder une image intégrale en appliquant directement à cette dernière une transformée en ondelettes discrète DWT (de l'anglais « Discrete Wavelet Transform ») suivie d'un codage des coefficients obtenus à l'issue de cette transformée. Selon un deuxième exemple, dans le document « New HEVC prediction modes for 3D holoscopic video coding », Conti, Nunes, Soares, ICIP 2012, Orlando, Oct. 2012, il est proposé de nouveaux modes de prédiction pour coder une image intégrale au moyen d'un codeur vidéo 2D.

L'inconvénient majeur d'une telle première méthode réside dans le fait que la résolution de l'image intégrale étant très élevée, cette dernière est difficile à coder. Cette première méthode oblige à comprimer un volume élevé d'informations, ce qui la rend peu performante.

La deuxième méthode de codage consiste à décomposer l'image intégrale en une pluralité de vues qui représentent chacune une scène 3D selon une position angulaire de visualisation spécifique. Chaque pixel ou zone de pixels associé à une vue considérée enregistre les informations relatives aux rayons lumineux réfléchis par un objet en perspective dans la scène, selon une même direction. Un codage 3D est ensuite appliqué aux vues ainsi obtenues. Par exemple, dans les documents « 3D Holoscopic video coding using MVC », Dick, Almeida, Soares, Nunes, EUROCON 2011 et « Efficient compression method for integral images using multi-view video coding », S. Shi, P. Gioia, and G. Madec, ICIP 2011, Brussels, Belgium, September 2011, une série de vues d'une image intégrale peut être considérée comme une image multi-vues (Multi View Video) de la scène et de ce fait, une séquence d'images intégrales peut être décomposée en une séquence vidéo multi-vues. Ainsi, ladite série de vues peut être comprimée à l'aide d'une technique de codage standard telle que MVC (de l'anglais « Multi-view coding »).

Un inconvénient de cette deuxième méthode de codage est que son application pratique impose une limitation du nombre de vues à coder par la technique de codage MVC. De plus, pour reconstruire l'image intégrale dans sa totalité, une résolution élevée pour les vues ou un nombre élevé de vues est nécessaire car ces vues doivent contenir toute l'information angulaire contenue dans l'image intégrale qui est par la suite reconstruite au décodeur.

Une troisième méthode de codage est décrite dans le document suivant: CHEOL-HWA YOO ET AL: "Enhanced compression of integral images by combined use of residual images and MPEG-4 algorithm in three-dimensional integral imaging", OPTICS COMMUNICATIONS, NORTH-HOLLAND PUBLISHING CO. AMSTERDAM, NL, vol. 284, no. 20, 13 juin 2011, pages 4884-4893, ISSN: 0030-4018, DOI: 10.1016/ J.OPTCOM.2011.06.020.

### Objet et résumé de l'invention

Un des buts de l'invention est de remédier à des inconvénients de l'état de la technique précitée.

A cet effet, un objet de la présente invention concerne un procédé de codage d'au moins une image intégrale courante capturée par un dispositif de capture d'images, comprenant les étapes suivantes :
- décomposer l'image intégrale courante en au moins une vue représentant une perspective donnée d'une scène et à partir d'au moins un paramètre de capture d'image associé au dispositif de capture d'images,
- coder ladite au moins une vue,
- décoder ladite au moins vue,
- recomposer l'image intégrale courante à partir de ladite au moins une vue décodée par application d'une décomposition inverse de la décomposition de l'image intégrale et à partir dudit au moins un paramètre de capture d'image associé au dispositif de capture d'images,
- déterminer une image intégrale résiduelle par comparaison de ladite au moins une image intégrale courante avec ladite image intégrale recomposée,
- coder les données associées à l'image intégrale résiduelle et ledit au moins un paramètre de capture d'image associé au dispositif de capture d'images.

Ainsi, même si la ou les vues obtenues après décomposition de l'image intégrale courante ont une faible résolution, ce qui permet de coder un nombre réduit d'informations angulaires, les données de l'image intégrale courante qui sont perdues à l'issue d'un tel codage 3D sont introduites dans l'image intégrale résiduelle qui est déterminée et dont les valeurs pixelliques sont généralement faibles, donc peu coûteuses à coder.

Le codage d'une image intégrale selon l'invention est donc beaucoup moins coûteux en nombre de données à coder que les méthodes de codage de l'art antérieur exposées ci-dessus.

De façon connue en soi, la recomposition d'une image intégrale nécessite la connaissance d'au moins un paramètre de capture d'image associé au dispositif de capture d'images, tel que par exemple la résolution des micro-images constitutives de l'image intégrale ainsi que le nombre de ces micro-images.

Selon un mode de réalisation particulier, le procédé de codage comprend :
- une étape d'élaboration d'un premier signal de données contenant des données issues du codage de la au moins une vue,
- une étape d'élaboration d'un deuxième signal de données contenant les données associées à l'image intégrale résiduelle codées,
ledit au moins un paramètre de capture d'image associé au dispositif de capture d'images étant contenu soit dans le premier signal, soit dans le deuxième signal, soit dans un autre signal de données à élaborer.

Compte tenu de l'obtention d'un nombre réduit de données codées à l'issue du procédé de codage selon l'invention, une telle disposition permet avantageusement de réduire de façon notable le coût de signalisation de telles données codées à destination d'un décodeur.

Selon un autre mode de réalisation particulier, le nombre et la position des vues à coder de l'image intégrale courante sont sélectionnés comme étant ceux qui optimisent un critère de performance de codage prédéterminé.

Une telle disposition permet de tester plusieurs possibilités de coder une image intégrale courante conformément au procédé de codage selon l'invention, avec une seule vue, deux vues, trois vues, etc..., puis, selon le contexte de codage, de sélectionner le codage qui satisfait le meilleur compromis entre un nombre réduit de données à coder susceptible d'être obtenu et une qualité élevée de restitution de l'image intégrale reconstruite.

Selon un autre mode de réalisation particulier, le nombre et la position des vues de l'image intégrale courante sont sélectionnés comme étant ceux qui minimisent le nombre de données associées à l'image intégrale résiduelle.

Une telle disposition permet de tester plusieurs possibilités de coder une image intégrale courante conformément au procédé de codage selon l'invention, avec une seule vue, deux vues, trois vues, etc..., puis de sélectionner le codage pour lequel les pixels de l'image intégrale résiduelle déterminée sont les plus proches d'une valeur prédéterminée, par exemple zéro.

Selon un autre mode de réalisation particulier, il est procédé à une sélection d'une valeur d'un premier paramètre de quantification à appliquer au cours de l'étape de codage de ladite au moins une vue et à une sélection d'une valeur d'un deuxième paramètre de quantification à appliquer au cours de l'étape de codage des données associées à l'image intégrale résiduelle, lesdites valeurs étant sélectionnées comme optimisant un critère de performance de codage prédéterminé.

Une telle disposition permet de tester plusieurs pas de quantification différents lors du codage de ladite au moins une vue et des données associées à l'image intégrale résiduelle, et, selon le contexte de codage, de satisfaire un compromis entre la sévérité plus ou moins élevée (c'est-à-dire pas de quantification plus ou moins élevé) avec laquelle lesdites données vont être codées et une qualité plus ou moins élevée de restitution de l'image intégrale reconstruite.

Ainsi, en fonction du contexte de codage, un tel compromis sera appliqué plutôt à l'étape de codage de ladite au moins une vue, ou bien plutôt à l'étape de codage des données associées à l'image intégrale résiduelle.

Selon un autre mode de réalisation particulier, le procédé de codage selon l'invention comprend en outre une étape de transformation d'image qui est appliquée:
- entre l'étape de décomposition de l'image intégrale courante en ladite au moins une vue et l'étape de codage de ladite au moins une vue, et/ou
- entre l'étape de décodage de ladite au moins une vue et l'étape de recomposition de l'image intégrale courante, et/ou
- entre l'étape de recomposition de l'image intégrale courante et l'étape de détermination de l'image intégrale résiduelle.

L'avantage d'une telle transformation d'image est de réduire la quantité de données à coder de l'image intégrale résiduelle. Ce qui implique d'obtenir une image intégrale recomposée qui ressemble au mieux à l'image intégrale originale, et donc de permettre une recomposition efficace.

Une telle transformation d'image consiste par exemple en un filtrage, lissage d'image ou bien encore en une transformation géométrique d'image (dilatation, érosion, rotation, symétrie, etc...) qui permet de compenser la perte d'informations introduite par la décomposition de l'image intégrale courante en au moins une vue.

Selon un autre mode de réalisation particulier, l'étape de transformation d'image précitée est mise en oeuvre à l'aide d'un paramètre de transformation qui est sélectionné comme optimisant un critère de performance de codage prédéterminé ou bien comme minimisant le nombre de données associées à l'image intégrale résiduelle.

L'invention concerne également un dispositif de codage d'au moins une image intégrale courante capturée par un dispositif de capture d'images, comprenant :
- un premier module de traitement pour décomposer l'image intégrale courante en au moins une vue représentant une perspective donnée d'une scène et à partir d'au moins un paramètre de capture d'image associé au dispositif de capture d'images,
- un premier module de codage pour coder ladite au moins une vue,
- un module de décodage pour décoder ladite au moins une vue,
- un deuxième module de traitement pour recomposer l'image intégrale courante à partir de ladite vue décodée, par application d'une décomposition inverse de ladite décomposition de l'image intégrale et à partir dudit au moins un paramètre de capture d'image associé au dispositif de capture d'images,
- un module de calcul pour déterminer une image intégrale résiduelle par comparaison de ladite au moins une image intégrale courante avec ladite image intégrale recomposée,
- un deuxième module de codage pour coder les données associées à l'image intégrale résiduelle et ledit au moins un paramètre de capture d'image associé au dispositif de capture d'images.

Un tel dispositif de codage est notamment apte à mettre en oeuvre le procédé de codage précité.

L'invention concerne aussi un procédé de décodage d'un signal de données représentatif d'au moins une image intégrale courante acquise par un dispositif de capture d'images et qui a été précédemment codée, ledit procédé comprenant les étapes suivantes :
- identifier dans le signal de données au moins un paramètre de capture d'image associé au dispositif de capture d'images,
- décoder au moins une vue de l'image intégrale courante à partir dudit au moins un paramètre de capture d'image identifié, ladite au moins une vue représentant une perspective donnée d'une scène,
- recomposer une image intégrale en tant que prédicteur de l'image intégrale courante, à partir de ladite au moins une vue décodée et à partir dudit au moins un paramètre de capture d'image associé au dispositif de capture d'images,
- décoder des données codées représentatives de la différence entre ladite au moins image intégrale courante et l'image intégrale recomposée,
- reconstruire l'image intégrale courante à partir de ladite image intégrale recomposée et des données décodées représentatives de ladite différence.

Compte tenu de l'obtention d'un nombre réduit de données codées à l'issue du procédé de codage selon l'invention et donc de la réduction du coût de signalisation de ces données codées au décodeur, une telle disposition permet avantageusement de décoder un nombre de données moins important que dans l'art antérieur moyennant une qualité de reconstruction de l'image intégrale qui s'avère satisfaisante. Il en résulte un décodage plus efficace.

Selon un mode de réalisation particulier, l'étape de recomposition de l'image intégrale courante est mise en oeuvre à l'aide d'un paramètre de position de ladite au moins une vue décodée dans l'image intégrale courante à décoder, un tel paramètre de position étant prédéterminé ou bien lu dans le signal de données.

Dans le cas où le paramètre de position de ladite au moins une vue est prédéterminé, une telle information est connue à la fois au codage et au décodage. L'avantage de cette disposition est d'optimiser la réduction du coût de codage et d'éviter d'indiquer le paramètre de position dans le signal de données, ce qui permet d'optimiser le coût de signalisation.

Dans le cas où le paramètre de position de ladite au moins une vue est identifié dans le signal de données, cela signifie qu'une telle information a été nécessairement sélectionnée de façon optimale au codage, ce qui permet d'optimiser les performances de décodage de l'image intégrale courante.

Selon un autre mode de réalisation particulier :
- l'étape de décodage de ladite au moins une vue comprend la mise en oeuvre d'une étape de déquantification à partir d'un premier paramètre de quantification dont la valeur est identifiée dans le signal de données,
- l'étape de décodage des données codées représentatives de la différence entre ladite au moins image intégrale courante et l'image intégrale recomposée comprend la mise en oeuvre d'une étape de déquantification à partir d'un deuxième paramètre de quantification dont la valeur est identifiée dans le signal de données.

Selon un autre mode de réalisation particulier, le procédé de décodage comprend en outre une étape de transformation d'image à partir d'un paramètre de transformation prédéterminé ou bien lu dans le signal de données, une telle étape de transformation étant appliquée:
- entre l'étape de décodage de ladite au moins une vue et l'étape de recomposition de l'image intégrale courante en tant que prédicteur de l'image intégrale courante, et/ou
- entre l'étape de recomposition de l'image intégrale courante en tant que prédicteur de l'image intégrale courante et l'étape de reconstruction de l'image intégrale courante.

L'invention concerne également un dispositif de décodage d'un signal de données représentatif d'au moins une image intégrale courante acquise par un dispositif de capture d'images et qui a été précédemment codée, le dispositif de décodage comprenant :
- un module d'analyse pour identifier dans le signal de données au moins un paramètre de capture d'image associé au dispositif de capture d'images,
- un premier module de décodage pour décoder au moins une vue de l'image intégrale courante à partir dudit au moins un paramètre de capture d'image identifié, ladite au moins une vue représentant une perspective donnée d'une scène,
- un module de traitement pour recomposer une image intégrale en tant que prédicteur de l'image intégrale courante, à partir de ladite vue décodée et à partir dudit au moins un paramètre de capture d'image associé au dispositif de capture d'images,
- un deuxième module de décodage pour décoder des données codées représentatives de la différence entre ladite au moins une image intégrale courante et l'image intégrale recomposée,
- un module de reconstruction pour reconstruire l'image intégrale courante à partir de ladite image intégrale recomposée et des données décodées représentatives de ladite différence.

L'invention concerne encore les programmes d'ordinateur definis par les revendications indépendantes 9 et 15. Ces programmes peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Un exemple vise également un support d'enregistrement lisible par un ordinateur sur lequel est enregistré un programme d'ordinateur, ce programme comportant des instructions adaptées à la mise en oeuvre de l'un des procédés de codage ou de décodage selon l'invention, tels que décrits ci-dessus.

Un autre exemple vise également un support d'enregistrement lisible par un ordinateur sur lequel est enregistré un programme d'ordinateur, ce programme comportant des instructions adaptées à la mise en oeuvre du procédé de codage ou de décodage selon l'invention, tels que décrits ci-dessus.

Le support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, le support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'enregistrement peut être un circuit intégré dans lequel le programme est incorporé, le circuit étant adapté pour exécuter ou pour être utilisé dans l'exécution du procédé de codage ou de décodage précité.

### Brève description des dessins

D'autres caractéristiques et avantages apparaîtront à la lecture d'un mode de réalisation préféré décrit en référence aux figures dans lesquelles:
- la figure 1 représente les étapes du procédé de codage selon un mode de réalisation de l'invention,
- la figure 2 représente un mode de réalisation d'un dispositif de codage selon l'invention,
- la figure 3A représente un exemple d'image intégrale,
- la figure 3B représente un exemple d'acquisition d'image intégrale au moyen d'un dispositif de capture d'images,
- la figure 4A représente un exemple de décomposition de l'image intégrale en une seule vue,
- la figure 4B représente un exemple de décomposition de l'image intégrale en plusieurs vues,
- la figure 5 représente un mode de réalisation d'un dispositif de décodage selon l'invention,
- la figure 6 représente les principales étapes du procédé de décodage selon l'invention.

### Description détaillée de la partie codage

Un mode de réalisation de l'invention va maintenant être décrit, dans lequel le procédé de codage selon l'invention est utilisé pour coder une image intégrale ou une séquence d'images intégrales selon un signal binaire proche de celui qu'on obtient par un codage mis en oeuvre dans un codeur conforme à l'une quelconque des normes de codage vidéo actuelles ou à venir.

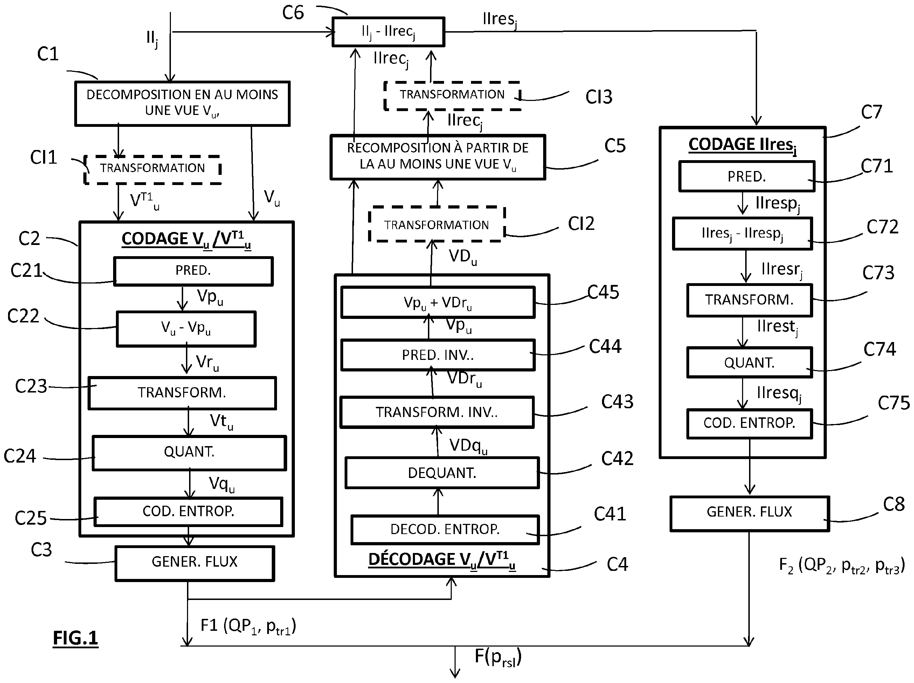

Dans ce mode de réalisation, le procédé de codage selon l'invention est par exemple implémenté de manière logicielle ou matérielle par modifications d'un tel codeur. Le procédé de codage selon l'invention est représenté sous la forme d'un algorithme comportant des étapes C1 à C8 telles que représentées à la **figure 1****.**

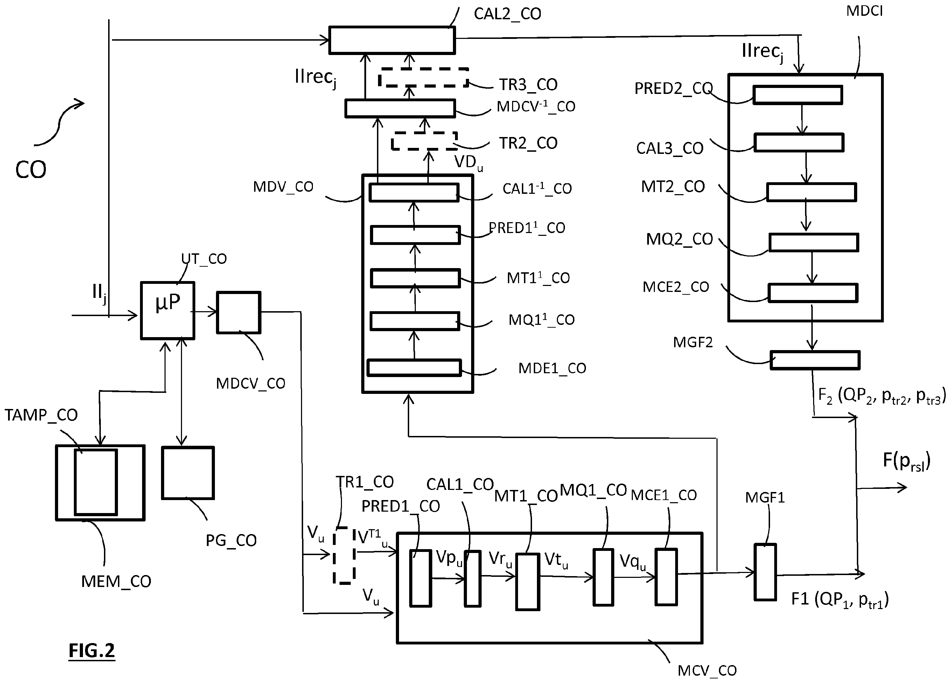

Selon le mode de réalisation de l'invention, le procédé de codage selon l'invention est implémenté dans un dispositif de codage ou codeur CO représenté à la **figure 2****.**

Comme illustré en **figure 2****,** un tel codeur comprend une mémoire MEM_CO comprenant une mémoire tampon TAMP_CO, une unité de traitement UT_CO équipée par exemple d'un microprocesseur µP et pilotée par un programme d'ordinateur PG_CO qui met en oeuvre le procédé de codage selon l'invention. A l'initialisation, les instructions de code du programme d'ordinateur PG_CO sont par exemple chargées dans une mémoire RAM (non représentée) avant d'être exécutées par le processeur de l'unité de traitement UT_CO.

Le procédé de codage représenté sur la **figure 1** s'applique à toute image intégrale courante IIⱼ fixe ou bien faisant partie d'une séquence d'images intégrales II₁, ..., IIⱼ,..., II_{M} (1≤j≤M) à coder.

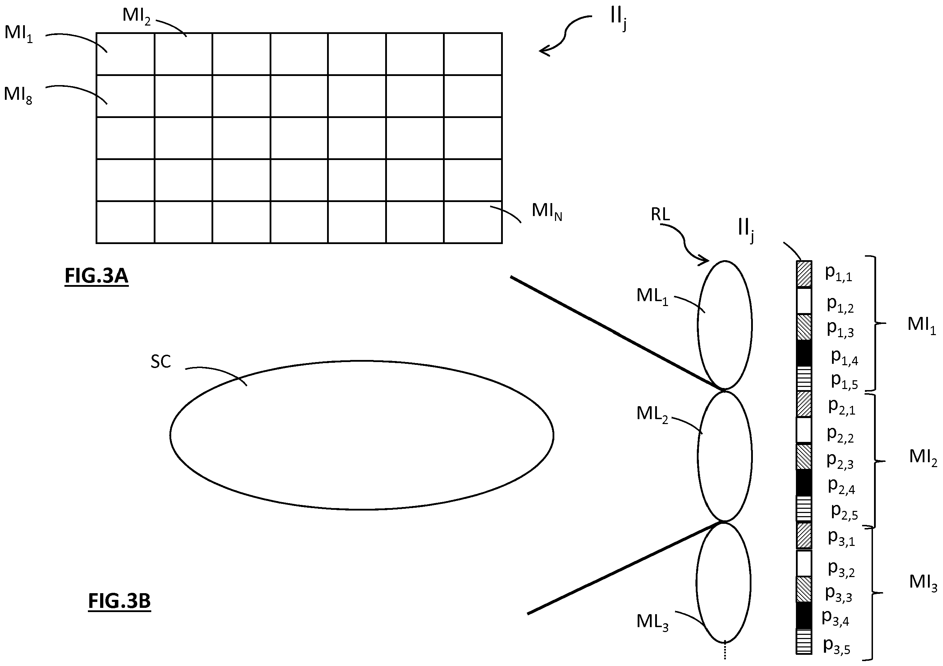

Comme représenté sur la **figure 3A****,** une image intégrale courante IIⱼ est composée de différentes images élémentaires appelées également micro-images MI₁, MI₂,....,MI_{N}. Dans un souci de simplification, les micro-images représentées ont toutes les mêmes dimensions et la même résolution. Il va de soi que l'invention s'applique également à des micro-images de dimensions différentes et de résolution respective différente.

Comme représenté sur la **figure 3B****,** l'image intégrale courante IIⱼ est acquise classiquement à l'aide d'un dispositif de capture d'images qui comprend une caméra (non représentée) et un réseau lenticulaire RL qui est disposé entre une scène SC en trois dimensions et la caméra.

Le réseau lenticulaire RL comprend une pluralité de microlentilles, dont seulement trois microlentilles ML₁, ML₂, ML₃ sont représentées sur la **figure 3B****.** Dans l'exemple représenté, les microlentilles sont toutes identiques. L'image intégrale IIⱼ est restituée sur un écran (non représenté) qui est disposé dans le plan focal des microlentilles précitées. De façon connue en soi, chaque micro-image de l'image intégrale IIⱼ contient plusieurs pixels de couleur différente, chacun de ces pixels étant représentatif d'une perspective donnée de la scène SC. Dans l'exemple représenté, chaque micro-image a la même taille qu'une microlentille et donc seulement trois micro-images MI₁, MI₂ et MI₃ sont représentées, respectivement en correspondance avec les trois microlentilles ML₁, ML₂, ML₃. Dans l'exemple représenté, chaque micro-image est composée par exemple de cinq pixels de couleur différente. Pour une micro-image MIᵢ donnée (1≤i≤N), cette dernière contient cinq pixels P_{i,1}, P_{i,2}, P_{i,3}, P_{i,4}, P_{i,5}.

Pendant l'acquisition de l'image intégrale IIⱼ, des rayons lumineux provenant de la scène SC traversent chaque microlentille ML₁, ML₂, ML₃, puis viennent frapper les pixels de chaque cellule du capteur, dans le plan focal desdites microlentilles. Compte tenu de la configuration particulière du réseau lenticulaire RL et de la matrice de pixels constituant l'écran, les rayons lumineux :
- frappent selon un premier angle d'incidence les pixels P_{1,1}, P_{2,1}, P_{3,1},
- frappent selon un deuxième angle d'incidence les pixels P_{1,2}, P_{2,2}, P_{3,2},
- frappent selon un troisième angle d'incidence les pixels P_{1,3}, P_{2,3}, P_{3,3},
- frappent selon un quatrième angle d'incidence les pixels P_{1,4}, P_{2,4}, P_{3,4},
- frappent selon un cinquième angle d'incidence les pixels P_{1,5}, P_{2,5}, P_{3,5}.

De façon connue en soi, chaque angle d'incidence correspond à un angle de visualisation particulier selon lequel un observateur a la possibilité de visualiser la scène SC. Les valeurs de ces angles sont comprises dans la plage angulaire caractéristique d'une microlentille considérée. Une telle plage angulaire, correspondant par exemple à celle de la microlentille ML₂, est représentée en trait plein et gras sur la **figure 3B** à titre illustratif.

En fonction du contexte de codage souhaité, le dispositif de capture d'images est configuré de façon à adapter le nombre de microlentilles qui le constituent ainsi que la résolution de ces dernières. Ainsi, toute image intégrale acquise par un tel dispositif de capture d'images est caractérisée par un nombre donné de micro-images et une résolution donnée pour chacune de ces micro-images, ces deux nombres constituant des paramètres associés au dispositif de capture d'images.

Au cours d'une étape C1 représentée sur la **figure 1****,** l'image intégrale courante IIⱼ est décomposée en au moins une vue Vᵤ à partir de ladite pluralité de micro-images constituant l'image intégrale courante IIⱼ et de la résolution de ces dernières.

L'étape C1 est mise en oeuvre par un module logiciel de traitement MDCV_CO tel que représenté sur la **figure 2****.**

Selon un premier exemple, dans le cas où chacune des micro-images de l'image intégrale courante IIⱼ contient K pixels de couleurs différentes, l'image intégrale courante IIⱼ est décomposée en :
- une vue qui contient le premier pixel de la micro-image MI₁, le premier pixel de la micro-image MI_{2,...}., le premier pixel de la micro-image MI_{N},
- et/ou une vue qui contient le deuxième pixel de la micro-image MI₁, le deuxième pixel de la micro-image MI₂, ..., le deuxième pixel de la micro-image MI_{N},
- .....,
- et/ou une vue qui contient le Kième pixel de la micro-image MI₁, le Kième pixel de la micro-image MI₂, ..., le Kième pixel de la micro-image MI_{N}.

Selon un deuxième exemple, dans le cas où chacune des micro-images de l'image intégrale courante IIⱼ contient K pixels de couleurs différentes, l'image intégrale courante IIⱼ est décomposée en :
- une vue qui contient les quatre premiers pixels de la micro-image MI₁, les quatre premiers pixels de la micro-image MI_{2,...}., les quatre premiers pixels de la micro-image MI_{N}, ces quatre premiers pixels étant constitués, pour une micro-image considérée, par exemple par les premier et deuxième pixels de la première ligne de cette micro-image, ainsi que les premier et deuxième pixels de la deuxième ligne de cette micro-image,
- et/ou une vue qui contient les quatre deuxièmes pixels de la micro-image MI₁, les quatre deuxièmes pixels de la micro-image MI_{2,...}., les quatre deuxièmes pixels de la micro-image MI_{N}, ces quatre deuxièmes pixels étant constitués, pour une micro-image considérée, par exemple par les troisième et quatrième pixels de la première ligne de cette micro-image, ainsi que les troisième et quatrième pixels de la deuxième ligne de cette micro-image,
- .....,
- et ou une vue qui contient les quatre derniers pixels de la micro-image MI₁, les quatre derniers pixels de la micro-image MI_{2,...}., les quatre derniers pixels de la micro-image MI_{N}, ces quatre derniers pixels étant constitués, pour une micro-image considérée, par exemple par les avant dernier et dernier pixels de l'avant dernière ligne de cette micro-image, ainsi que les avant-dernier et dernier pixels de la dernière ligne de cette micro-image.

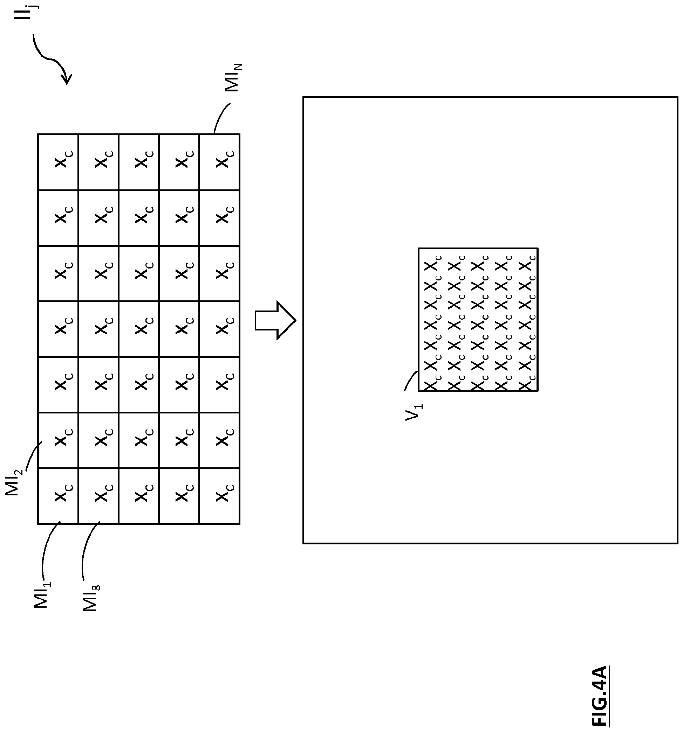

Selon un mode de réalisation représenté sur la **figure 4A****,** l'image intégrale courante IIⱼ est décomposée par exemple en une seule vue V₁ qui contient par exemple le pixel placé au centre de la micro-image MI₁, le pixel placé au centre de la micro-image MI₂, ..., le pixel placé au centre de la micro-image MI_{N}. Sur la **figure 4A****,** le pixel central de chaque micro-image est symbolisé par « x_{c} ».

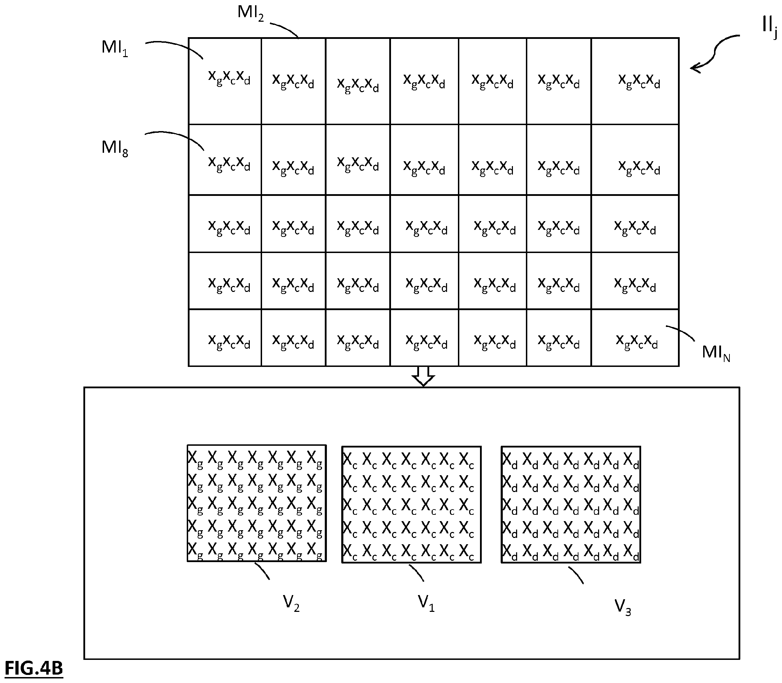

Selon un autre mode de réalisation représenté sur la **figure 4B****,** l'image intégrale courante IIⱼ est décomposée par exemple en trois vues V₁, V₂, V₃
- la vue V₁ est celle représentée à la **figure 4A****,**
- la vue V₂ contient par exemple le pixel placé à gauche du pixel central de la micro-image MI₁, le pixel placé à gauche du pixel central de la micro-image MI₂, ..., le pixel placé à gauche du pixel central de la micro-image MI_{N}. Sur la **figure 4B****,** le pixel placé à gauche du pixel central de chaque micro-image est symbolisé par « x_{g} ».
- la vue V₃ contient par exemple le pixel placé à droite du pixel central de la micro-image MI₁, le pixel placé à droite du pixel central de la micro-image MI₂, ..., le pixel placé à droite du pixel central de la micro-image MI_{N}. Sur la **figure 4B****,** le pixel placé à droite du pixel central de chaque micro-image est symbolisé par « x_{d} ».

Au cours d'une étape C2 représentée à la **figure** 1, il est procédé au codage de ladite au moins une vue Vᵤ.

Une telle étape C2 est mise en oeuvre par un module logiciel de codage de vues MCV_CO tel que représenté sur la **figure 2****,** lequel module est piloté par le microprocesseur µP de l'unité de traitement UT_CO.

Un tel module MCV_CO de codage de vues comprend classiquement :
- un module PRED1_CO de prédiction,
- un module CAL1_CO de calcul de données résiduelles,
- un module MT1_CO de transformation de type DCT (abréviation anglaise de « Discrète Cosine Transform »), DST (abréviation anglaise de « Discrète Sine Transform »), DWT (abréviation anglaise de « Discrete Wavelet Transform »)
- un module MQ1_CO de quantification,
- un module MCE1_CO de codage entropique par exemple de type CABAC ("Context Adaptive Binary Arithmetic Coder" en anglais) ou encore un codeur de Huffman connu en tant que tel.

De façon connue en soi, au cours de l'étape C2, il est procédé à une sous-étape C21 de prédiction de ladite vue Vᵤ par des techniques connues de prédiction intra et/ou inter. A cet effet, la vue Vᵤ est découpée en groupes de pixels, par exemple en blocs de pixels, chaque bloc étant prédit par rapport à au moins un bloc prédicteur conformément à un mode de prédiction sélectionné parmi une pluralité de modes de prédiction prédéterminés. Par exemple, dans le cas d'un codage HEVC en mode de prédiction Intra, il y a trente-cinq modes de prédiction prédéterminés.

Un tel bloc prédicteur est un bloc de pixels qui a été déjà codé ou bien codé puis décodé ou non. Un tel bloc prédicteur est préalablement stocké dans la mémoire tampon TAMP_CO du codeur CO telle que représentée à la **figure 2****.**

Pour un bloc considéré de la vue Vᵤ, un bloc prédicteur optimal est obtenu suite à une mise en compétition desdits modes de prédiction prédéterminés, par exemple par minimisation d'un critère débit distorsion bien connu de l'homme du métier. Le bloc prédicteur optimal est considéré comme une approximation du bloc considéré.

A l'issue de la sous-étape C21, une vue prédictrice Vpᵤ est obtenue.

Une telle sous-étape C21 est mise en oeuvre par le module de prédiction PRED1_CO représenté sur la **figure 2****.**

L'étape de codage C2 comprend également une sous-étape C22 au cours de laquelle il est procédé au calcul de la différence entre chaque bloc de la vue Vᵤ et respectivement chaque bloc prédicteur optimal correspondant qui a été sélectionné au cours de la sous-étape C21.

Une pluralité de blocs de données résiduelles est alors obtenue à l'issue de la sous-étape C22, ces blocs résiduels constituant une vue résiduelle Vrᵤ.

Une telle sous-étape C22 est mise en oeuvre par le module de calcul CAL1_CO représenté sur la **figure 2****.**

L'étape de codage C2 comprend également une sous-étape C23 au cours de laquelle il est procédé à la transformation de chaque bloc de données résiduelles selon une opération classique de transformation directe telle que par exemple une transformation de type DCT, DST ou DWT, pour produire une pluralité de blocs transformés qui constituent la vue Vᵤ transformée, désignée par la référence Vtᵤ. Une telle opération est effectuée par le module MT1_CO représenté sur la **figure 2****.**

L'étape de codage C2 comprend également une sous-étape C24 au cours de laquelle il est procédé à la quantification de chaque bloc transformé selon une opération classique de quantification, telle que par exemple une quantification scalaire ou vectorielle. Un ensemble Vqᵤ de coefficients quantifiés est alors obtenu à l'issue de cette sous-étape. Une telle sous-étape C24 est effectuée au moyen du module MQ1_CO de quantification tel que représenté à la **figure 2****.**

Une telle sous-étape de quantification est mise en oeuvre à l'aide d'un pas de quantification QP₁ qui est prédéterminé. La manière dont ce paramètre est déterminé sera décrite plus loin dans la description.

L'étape de codage C2 comprend également une sous-étape C25 au cours de laquelle il est procédé au codage de l'ensemble Vqᵤ de coefficients selon un ordre prédéterminé, tel que notamment l'ordre « raster scan ». Dans le mode préféré de réalisation, le codage effectué est un codage entropique de type arithmétique ou de Huffman. La sous-étape C25 consiste alors à :
- lire le ou les symboles d'un ensemble prédéterminé de symboles qui sont associés à chaque bloc de données quantifié de la vue Vᵤ,
- associer des informations numériques, telles que des bits, au(x) symbole(s) lu(s).

Une telle sous-étape C25 de codage entropique est mise en oeuvre par le module de codage entropique MCE1_CO représenté sur la **figure 2****.**

Au cours de la sous-étape C25, la valeur du pas de quantification QP₁ est également codée entropiquement.

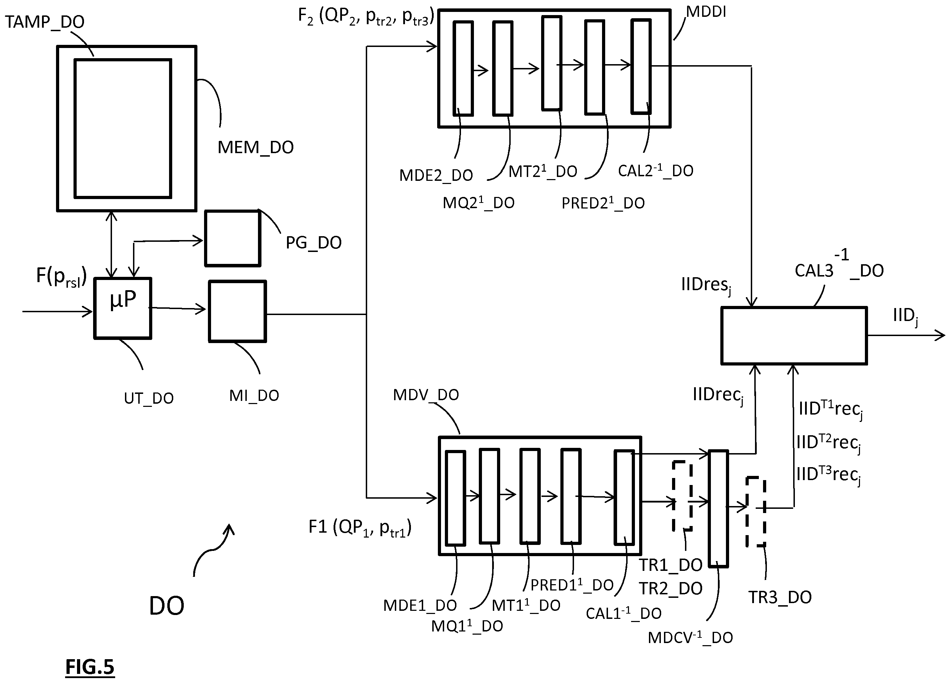

A l'issue de l'étape de codage C2 de la vue Vᵤ, il est procédé, au cours d'une étape C3 représenté sur la **figure 1****,** à l'élaboration d'un signal de données F₁ qui contient l'ensemble des données codées entropiquement associées à la vue Vᵤ. Un tel signal est ensuite transmis par un réseau de communication (non représenté), à un terminal distant. Celui-ci comporte le décodeur DO représenté à la **figure 5****.**

L'étape C3 de production d'un tel flux est mise en oeuvre par le module MGF1 de génération de flux de données, tel que représenté sur la **figure 2****.**

De façon connue en soi, le signal F₁ contient les informations utilisées au cours de la sous-étape de prédiction C21 De telles informations comprennent notamment le type de prédiction (inter ou intra), et le cas échéant, le mode de prédiction sélectionné, le type de partitionnement des blocs de la vue Vᵤ si ces derniers ont été subdivisés, l'indice de la vue de référence et le vecteur de déplacement utilisés dans le cas où un mode de prédiction inter a été sélectionné. De telles informations sont codées entropiquement avant d'être transmises dans le flux F₁.

En particulier, le signal F₁ contient également la valeur codée entropiquement du pas de quantification QP₁.

Selon l'invention, au cours d'une étape C4 représentée à la **figure 1****,** il est procédé au décodage de ladite au moins une vue Vᵤ.

Une telle étape C4 est mise en oeuvre par un module logiciel de décodage de vues MDV_CO tel que représenté sur la **figure 2****,** lequel module est piloté par le microprocesseur µP de l'unité de traitement UT_CO.

Un tel module MDV_CO de codage de vues comprend classiquement :
- un module MDE1_CO de décodage entropique, par exemple de type CABAC ("Context Adaptive Binary Arithmetic Coder" en anglais) ou encore un décodeur de Huffman connu en tant que tel,
- un module MQ1⁻¹_CO de déquantification,
- un module MT1⁻¹_CO de transformation inverse de type DCT⁻¹ (abréviation anglaise de « Discrète Cosine Transform »), DST⁻¹ (abréviation anglaise de « Discrète Sine Transform »), DWT⁻¹ (abréviation anglaise de « Discrete Wavelet Transform »),
- un module PRED1⁻¹_CO de prédiction inverse,
- un module CAL1⁻¹_CO de calcul de reconstruction de vue.

Au cours de l'étape C4, il est procédé à une sous-étape C41 de décodage entropique des données codées entropiquement associées à la vue Vᵤ, selon un ordre prédéterminé, tel que notamment l'ordre « raster scan ». Dans le mode préféré de réalisation, le décodage effectué est un décodage entropique de type arithmétique ou de Huffman. La sous-étape C41 consiste alors à :
- lire le ou les symboles d'un ensemble prédéterminé de symboles qui sont associés à chaque bloc quantifié de la vue Vᵤ,
- associer des informations numériques, telles que des bits, au(x) symbole(s) lu(s).

A l'issue de la sous-étape C41 précitée, est obtenue une pluralité d'informations numériques associées aux données quantifiées qui ont été codées au cours de l'étape C25 précitée.

Une telle sous-étape C41 de décodage entropique est mise en oeuvre par le module de décodage entropique MDE1_CO représenté sur la **figure 2****.**

Au cours de la sous-étape C41 précitée, est également décodé l'indice de chaque bloc prédicteur optimal qui a été utilisé pour prédire chaque bloc de la vue Vᵤ à la sous-étape C21 de la **figure 1****.** A l'issue de cette opération, chaque bloc prédicteur correspondant, qui est stocké dans la mémoire tampon TAMP_CO du codeur CO de la **figure 2****,** est donc ainsi identifié. De tels blocs prédicteurs sont par exemple des blocs de pixels qui ont été déjà décodés ou non et qui ont été obtenus conformément au mode de prédiction sélectionné au codage de la vue Vᵤ.

L'étape de codage C4 comprend également une sous-étape C42 au cours de laquelle il est procédé à la déquantification des informations numériques obtenues à la suite de la sous-étape C41, selon une opération classique de déquantification qui est l'opération inverse de la quantification mise en oeuvre à la sous-étape C24. Un ensemble VDqᵤ de coefficients déquantifiés est alors obtenu à l'issue de cette sous-étape. Une telle sous-étape C42 est effectuée au moyen du module MQ1⁻¹_CO de déquantification tel que représenté à la **figure 2****.**

L'étape de codage C4 comprend également une sous-étape C43 au cours de laquelle il est procédé à une transformation de l'ensemble VDqᵤ de coefficients quantifiés qui est de type DCT⁻¹, DST⁻¹ ou DWT⁻¹. Cette transformation est l'opération inverse de la transformation effectuée à la sous-étape C23. A l'issue de cette sous-étape, est obtenue une pluralité de blocs de données résiduelles décodés qui constituent la vue Vᵤ résiduelle décodée, désignée par la référence VDrᵤ. Une telle opération est effectuée par le module MT1⁻¹_CO représenté sur la **figure 2****.**

L'étape de codage C4 comprend également une sous-étape C44 de prédiction de ladite vue Vᵤ à décoder, par sélection de la vue prédictrice optimale constituée des blocs prédicteurs optimaux obtenus à la suite de la sous-étape C21 précitée.

Une telle sous-étape C44 est mise en oeuvre par le module de prédiction PRED1⁻¹_CO représenté sur la **figure 2****.**

L'étape de codage C4 comprend également une sous-étape de calcul C45, au cours de laquelle il est procédé à la construction de la vue décodée VDᵤ en ajoutant à chacun des blocs résidus décodés de la vue résiduelle décodée VDrᵤ obtenue à l'issue de la sous-étape C43, respectivement chacun des blocs prédicteurs correspondants qui ont été identifiés à la sous-étape C41 précitée.

Une telle sous-étape C45 est mise en oeuvre par le module de calcul CAL1⁻¹_CO représenté sur la **figure 2****.**

Selon l'invention, au cours d'une étape C5 représentée à la **figure 1****,** il est procédé à la recomposition de l'image intégrale courante IIⱼ à partir de ladite au moins une vue décodée VDᵤ. Une telle étape consiste à appliquer une décomposition inverse de ladite décomposition de l'image intégrale effectuée à l'étape C1 précitée, en tenant compte de la résolution de ladite au moins une vue Vᵤ et de sa position dans l'image intégrale courante IIⱼ.

L'étape C5 est mise en oeuvre par un module logiciel MDCV⁻¹_CO de recomposition en vues, tel que représenté sur la **figure 2****.**

Selon un premier exemple, dans le cas où chacune des micro-images de l'image intégrale courante IIⱼ contient K pixels de couleurs différentes, l'image intégrale courante IIrecⱼ est recomposée en :
- une vue qui contient le premier pixel de la micro-image MI₁, le premier pixel de la micro-image MI_{2,...}., le premier pixel de la micro-image MI_{N},
- et/ou une vue qui contient le deuxième pixel de la micro-image MI₁, le deuxième pixel de la micro-image MI₂, ..., le deuxième pixel de la micro-image MI_{N},
- .....,
- et/ou une vue qui contient le Kième pixel de la micro-image MI₁, le Kième pixel de la micro-image MI₂, ..., le Kième pixel de la micro-image MI_{N}.

Selon un deuxième exemple, dans le cas où chacune des micro-images de l'image intégrale courante IIⱼ contient K pixels de couleurs différentes, l'image intégrale courante IIⱼ est recomposée en :
- une vue qui contient les quatre premiers pixels de la micro-image MI₁, les quatre premiers pixels de la micro-image MI_{2,...}., les quatre premiers pixels de la micro-image MI_{N}, ces quatre premiers pixels étant constitués, pour une micro-image considérée, par exemple par les premier et deuxième pixels de la première ligne de cette micro-image, ainsi que les premier et deuxième pixels de la deuxième ligne de cette micro-image
- et/ou une vue qui contient les quatre deuxièmes pixels de la micro-image MI₁, les quatre deuxièmes pixels de la micro-image MI_{2,...}., les quatre deuxièmes pixels de la micro-image MI_{N}, ces quatre deuxièmes pixels étant constitués, pour une micro-image considérée, par exemple par les troisième et quatrième pixels de la première ligne de cette micro-image, ainsi que les troisième et quatrième pixels de la deuxième ligne de cette micro-image,
- .....,
- et ou une vue qui contient les quatre derniers pixels de la micro-image MI₁, les quatre derniers pixels de la micro-image MI_{2,...}., les quatre derniers pixels de la micro-image MI_{N}, ces quatre derniers pixels étant constitués, pour une micro-image considérée, par exemple par les avant dernier et dernier pixels de l'avant dernière ligne de cette micro-image, ainsi que les avant-dernier et dernier pixels de la dernière ligne de cette micro-image.

Selon le mode de réalisation représenté sur la **figure 4A****,** l'image intégrale recomposée courante IIrecⱼ se compose d'une seule vue V₁ qui contient par exemple le pixel placé au centre de la micro-image MI₁, le pixel placé au centre de la micro-image MI₂, ..., le pixel placé au centre de la micro-image MI_{N}.

Selon l'autre mode de réalisation représenté sur la **figure 4B****,** l'image intégrale recomposée courante IIrecⱼ se compose de trois vues V₁, V₂, V₃.
- la vue V₁ est celle représentée à la **figure 4A****,**
- la vue V₂ contient par exemple le pixel placé à gauche du pixel central de la micro-image MI₁, le pixel placé à gauche du pixel central de la micro-image MI₂, ..., le pixel placé à gauche du pixel central de la micro-image MI_{N},
- la vue V₃ contient par exemple le pixel placé à droite du pixel central de la micro-image MI₁, le pixel placé à droite du pixel central de la micro-image MI₂, ..., le pixel placé à droite du pixel central de la micro-image MI_{N}.

Selon l'invention, au cours d'une étape C6 représentée à la **figure 1****,** il est procédé au calcul de la différence entre l'image intégrale courante IIⱼ et l'image intégrale recomposée IIrecⱼ qui a été obtenue à l'étape C5.

A l'issue de l'étape C6, une image intégrale résiduelle courante IIresⱼ est alors obtenue.

Une telle étape C6 est mise en oeuvre par un module de calcul CAL2_CO représenté sur la **figure 2****.**

Une telle image intégrale résiduelle courante IIresⱼ est alors considérée comme une image en deux dimensions (2D) qui subit un codage 2D au cours d'une étape C7 représentée à la **figure 1****.** Conformément à l'invention, n'importe quel type de codage 2D peut être appliqué.

Une telle étape C7 est mise en oeuvre par un module logiciel MDCI de codage d'images, tel que représenté sur la **figure 2****,** lequel module est piloté par le microprocesseur µP de l'unité de traitement UT_CO.

Un tel module MDCI de codage d'images en deux dimensions peut comprendre par exemple :
- un module PRED2_CO de prédiction,
- un module CAL3_CO de calcul de données résiduelles,
- un module MT2_CO de transformation de type DCT (abréviation anglaise de « Discrète Cosine Transform »), DST (abréviation anglaise de « Discrète Sine Transform »), DWT (abréviation anglaise de « Discrete Wavelet Transform »)
- un module MQ2_CO de quantification,
- un module MCE2_CO de codage entropique par exemple de type CABAC ("Context Adaptive Binary Arithmetic Coder" en anglais) ou encore un codeur de Huffman connu en tant que tel.

Au cours de l'étape C7, il est procédé à une sous-étape C71 de prédiction de ladite image intégrale résiduelle IIresⱼ par des techniques connues de prédiction intra et/ou inter. A cet effet, l'image intégrale résiduelle IIresⱼ est découpée en groupes de pixels, par exemple en blocs de pixels, chaque bloc étant prédit par rapport à au moins un bloc prédicteur conformément à un mode de prédiction sélectionné parmi une pluralité de modes de prédiction prédéterminés. Par exemple, dans le cas d'un codage HEVC en mode de prédiction Intra, il y a trente-cinq modes de prédiction prédéterminés.

Un tel bloc prédicteur est un bloc de pixels qui a été déjà codé ou bien codé puis décodé ou non. Un tel bloc prédicteur est préalablement stocké dans la mémoire tampon TAMP_CO du codeur CO telle que représentée à la **figure 2****.**

Pour un bloc considéré de l'image intégrale résiduelle IIresⱼ, un bloc prédicteur optimal est obtenu suite à une mise en compétition desdits modes de prédiction prédéterminés, par exemple par minimisation d'un critère débit distorsion bien connu de l'homme du métier. Le bloc prédicteur optimal est considéré comme une approximation du bloc considéré.

A l'issue de la sous-étape C71, une image intégrale résiduelle prédictrice IIrespⱼ est obtenue.

Une telle sous-étape C71 est mise en oeuvre par le module de prédiction PRED2_CO représenté sur la **figure 2****.**

L'étape de codage C7 comprend également une sous-étape C72 au cours de laquelle il est procédé au calcul de la différence entre chaque bloc de l'image intégrale résiduelle IIresⱼ et respectivement chaque bloc prédicteur optimal correspondant qui a été sélectionné au cours de la sous-étape C71.

Une pluralité de blocs de données résiduelles est alors obtenue à l'issue de la sous-étape C72, ces blocs résiduels constituant une image intégrale résiduelle IIresrⱼ.

Une telle sous-étape C72 est mise en oeuvre par le module de calcul CAL3_CO représenté sur la **figure 2****.**

L'étape de codage C7 comprend également une sous-étape C73 au cours de laquelle il est procédé à la transformation de chaque bloc de données résiduelles obtenus à la sous-étape C72 selon une opération classique de transformation directe telle que par exemple une transformation de type DCT, DST ou DWT, pour produire une pluralité de blocs transformés qui constituent l'image intégrale résiduelle transformée, désignée par la référence IIrestⱼ. Une telle opération est effectuée par le module MT2_CO représenté sur la **figure 2****.**

L'étape de codage C7 comprend également une sous-étape C74 au cours de laquelle il est procédé à la quantification de chaque bloc transformé obtenu à la sous-étape C73, selon une opération classique de quantification, telle que par exemple une quantification scalaire ou vectorielle. Un ensemble IIresqᵤ de coefficients quantifiés est alors obtenu à l'issue de cette sous-étape. Une telle sous-étape C74 est effectuée au moyen du module MQ2_CO de quantification tel que représenté à la **figure 2****.**

En outre, une telle sous-étape de quantification est mise en oeuvre à l'aide d'un pas de quantification QP₂ qui est prédéterminé. La manière dont ce paramètre est déterminé sera décrite plus loin dans la description.

L'étape de codage C7 comprend également une sous-étape C75 au cours de laquelle il est procédé au codage de l'ensemble IIresqᵤ de coefficients selon un ordre prédéterminé, tel que notamment l'ordre « raster scan ». Dans le mode préféré de réalisation, le codage effectué est un codage entropique de type arithmétique ou de Huffman. La sous-étape C75 consiste alors à :
- lire le ou les symboles d'un ensemble prédéterminé de symboles qui sont associés à chaque bloc de données quantifié de l'Image intégrale résiduelle courante IIresⱼ,
- associer des informations numériques, telles que des bits, au(x) symbole(s) lu(s).

Une telle sous-étape C75 de codage entropique est mise en oeuvre par le module de codage entropique MCE2_CO représenté sur la **figure 2****.**

Au cours de la sous-étape C75, la valeur du pas de quantification QP₂ est également codée entropiquement.

A l'issue de l'étape de codage C7 de l'image intégrale résiduelle IIresⱼ, il est procédé, au cours d'une étape C8 représenté sur la **figure 1****,** à l'élaboration d'un signal de données F₂ qui contient l'ensemble des données codées entropiquement associées à l'image intégrale résiduelle courante IIresⱼ. Un tel signal F₂ est ensuite transmis par un réseau de communication (non représenté), à un terminal distant qui comporte le décodeur DO représenté à la **figure 5****.**

L'étape C8 de production d'un tel flux est mise en oeuvre par le module MGF2 de génération de flux de données, tel que représenté sur la **figure 2****.**

De façon connue en soi, le signal F₂ contient les informations utilisées au cours de la sous-étape de prédiction C71. De telles informations comprennent notamment le type de prédiction (inter ou intra), et le cas échéant, le mode de prédiction sélectionné, le type de partitionnement des blocs de l'image intégrale résiduelle IIresⱼ si ces derniers ont été subdivisés, l'indice de l'image intégrale de référence et le vecteur de déplacement utilisés dans le cas où un mode de prédiction inter a été sélectionné. De telles informations sont codées entropiquement avant d'être transmises dans le flux F₂.

En particulier, le signal F₂ contient également la valeur codée entropiquement du pas de quantification QP₂.

Dans l'exemple de réalisation représenté sur les **figures 1** et **2****,** les signaux de données F₁ et F₂ sont multiplexés de façon à former un unique signal qui est transmis au décodeur DO.

En variante, les signaux de données F₁ et F₂ pourraient être transmis séparément au décodeur DO.

Le paramètre de résolution des micro-images de l'image intégrale courante IIⱼ, noté pᵣₛₗ sur les **figures 1** et **2****,** est quant à lui codé entropiquement soit au cours de la sous-étape de codage entropique C25, soit au cours de la sous-étape de codage entropique C75. Ainsi, le paramètre de résolution des micro-images est inséré soit dans le signal de données F₁, soit dans le signal de données F₂, soit dans un autre signal de données (non représenté) qui peut être transmis séparément à destination du décodeur DO ou bien encore multiplexé avec les signaux de données F₁ et F₂.

Préalablement à l'étape C1 de décomposition en au moins une vue Vᵤ, le nombre de vues et la position de ces dernières sont sélectionnés comme étant ceux qui optimisent un critère de performance de codage prédéterminé. Par exemple, le nombre et la position des vues sont sélectionnés par minimisation par exemple d'un critère débit distorsion bien connu de l'homme du métier qui est appliqué à l'étape de codage C2 et à l'étape de codage C7.

Selon un deuxième mode de réalisation, le nombre et la position des vues sont sélectionnés comme étant ceux qui minimisent le nombre de données associées à l'image intégrale résiduelle IIresⱼ obtenue à l'issue de l'étape C6 de la **figure 1****.**

Selon le contexte de codage souhaité, le nombre et la position des vues qui ont ainsi été sélectionnés sont transmis ou non au décodeur DO.

La valeur du pas de quantification QP₁ utilisé lors de la sous-étape de quantification C24 et la valeur du pas de quantification QP₂ utilisé lors de la sous-étape de quantification C74 sont sélectionnées comme optimisant un critère de performance de codage prédéterminé.

Selon un mode de réalisation, les pas de quantification QP₁ et QP₂ sont sélectionnés chacun par minimisation par exemple d'un critère débit distorsion bien connu de l'homme du métier qui est appliqué à l'étape de codage C2 et à l'étape de codage C7.

En variante au mode de réalisation qui vient d'être décrit ci-dessus, comme illustré sur la **figure 1****,** il est procédé en outre:
- directement à la suite de l'étape C1, à une étape CI1 de transformation de l'image intégrale courante IIⱼ décomposée en au moins ladite vue Vᵤ, et/ou
- directement à la suite de l'étape C4 de décodage de ladite au moins une vue, à une étape CI2 de transformation de ladite vue reconstruite VDᵤ obtenue à la suite de la sous-étape C45, et/ou
- directement à la suite de l'étape C5 de recomposition de l'image intégrale courante, à une étape CI3 de transformation de l'image intégrale courante recomposée IIrecⱼ.

Le but de cette ou ces transformations est de réduire la quantité de données à coder dans l'image intégrale résiduelle IIresⱼ obtenue à la suite de l'étape C6 de la **figure 1****.** un tel but implique d'obtenir une image recomposée qui ressemble au mieux à l'image intégrale originale IIⱼ, et donc d'avoir une recomposition efficace.

Dans une variante préférée, seule ladite étape de transformation CI2 est appliquée car elle permet d'obtenir une recomposition de l'image intégrale courante IIⱼ qui est la plus efficace.

Lesdites étapes de transformation étant optionnelles, elles sont représentées en pointillé sur la **figure 1****.**

Les étapes de transformation CI1, CI2 et CI3 sont respectivement mises en oeuvre par des modules logiciels de transformation TR1_CO, TR2_CO et TR3_CO, tels que représentés en pointillé sur la **figure 2****.**

Chacune des étapes de transformation CI1, CI2 et CI3 utilise un paramètre de transformation correspondant Ptr₁, Ptr₂, Ptr₃.

Selon un premier mode de réalisation, les paramètres de transformation Ptr₁, Ptr₂, Ptr₃ sont sélectionnés comme étant ceux qui optimisent un critère de performance de codage prédéterminé. Par exemple, ces derniers sont sélectionnés par minimisation par exemple d'un critère débit distorsion bien connu de l'homme du métier qui est appliqué à l'étape de codage C2 et à l'étape de codage C7.

Selon un deuxième mode de réalisation, les paramètres de transformation Ptr₁, Ptr₂, Ptr₃ sont sélectionnés comme étant ceux qui minimisent le nombre de données associées à l'image intégrale résiduelle IIresⱼ obtenue à l'issue de l'étape C6 de la **figure 1****.**

Selon le contexte de codage souhaité, le paramètres de transformation Ptr₁, Ptr₂, Ptr₃ sont transmis ou non au décodeur DO.

Un exemple de transformation possible est le lissage. Le paramètre associé à cette transformation correspond à la taille en pixels du filtre de lissage appliqué à l'image.

Du fait que la décomposition en vues entraine une perte d'information, c'est à dire l'information contenue dans les vues qui ne sont pas extraites lors de l'étape C1 de décompostion, lors de l'étape C5 de décomposition inverse, de l'information erronée est introduite à la place de cette information manquante. L'image intégrale recomposée IIrecⱼ contient alors des détails qui ne correspondent pas aux détails de l'image intégrale originale courante IIⱼ.

Il en résulte que :
- les détails de l'image intégrale originale courante IIⱼ ne sont pas compensés/annulés lors de l'étape de soustraction C6 et restent dans l'image intégrale résiduelle IIresⱼ,
- des détails de l'image intégrale recomposée IIrecⱼ qui correspondent à de l'information erronée (donc inutile) viennent s'ajouter dans l'image intégrale résiduelle IIresⱼ.

Le fait de lisser l'image intégrale recomposée IIrecⱼ (et/ou ladite au moins une vue Vᵤ et/ou ladite au moins une vue reconstruite VDᵤ) permet de lisser ces zones de détails et par conséquent de lisser l'image intégrale résiduelle IIresⱼ, ce qui rend cette dernière moins coûteuse à coder.

En variante du lissage, une transformation géométrique (dilatation, érosion, rotation, symétrie, etc...) pourrait être appliquée à ladite au moins une vue Vᵤ et/ou à ladite au moins une vue reconstruite VDᵤ et/ou à l'image intégrale recomposée IIrecⱼ.

### Description détaillée de la partie décodage

Un mode de réalisation du procédé de décodage selon l'invention va maintenant être décrit, dans lequel le procédé de décodage est implémenté de manière logicielle ou matérielle par modifications d'un décodeur initialement conforme à l'une quelconque des normes de décodage vidéo actuelles ou à venir.

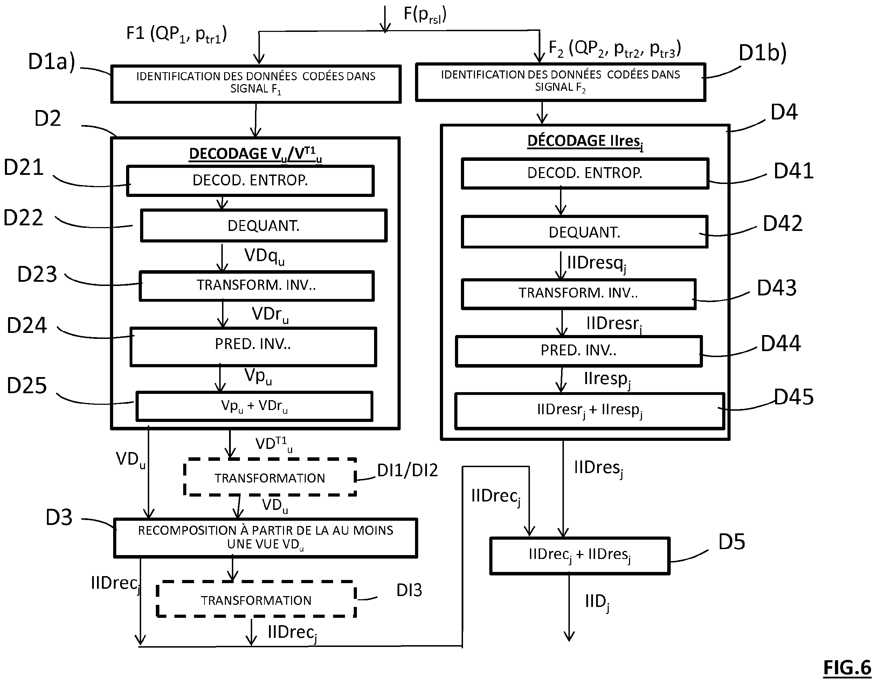

Le procédé de décodage selon l'invention est représenté sous la forme d'un algorithme comportant des étapes D1 à D5 telles que représentées à la **figure 6****.**

Comme illustré en **figure 5****,** le décodeur DO selon ce mode de réalisation de l'invention comprend une mémoire MEM_DO comprenant une mémoire tampon TAMP_DO, une unité de traitement UT_DO équipée par exemple d'un microprocesseur µP et pilotée par un programme d'ordinateur PG_DO qui met en oeuvre le procédé de décodage selon l'invention. A l'initialisation, les instructions de code du programme d'ordinateur PG_DO sont par exemple chargées dans une mémoire RAM avant d'être exécutées par le processeur de l'unité de traitement UT_DO.

Le procédé de décodage représenté sur la **figure 6** s'applique à toute image intégrale courante IIⱼ fixe à décoder ou bien faisant partie d'une séquence d'images intégrales II₁, ..., IIⱼ,..., II_{M} (1≤j≤M) à décoder.

A cet effet, des informations représentatives de l'image intégrale courante IIⱼ à décoder sont identifiées dans le signal de données F reçu au décodeur, tel que délivré à la suite du procédé de codage de la **figure 1****.**

En référence à la **figure 6****,** au cours d'une étape D1a), il est procédé à l'identification, dans ledit signal F₁ qui compose le signal de données F :
- du paramètre pᵣₛₗ de résolution des micro-images de l'image intégrale courante IIⱼ qui a été codée, dans le cas où ce paramètre a été inséré dans le signal F₁,
- de l'ensemble des données associées à la vue Vᵤ, telles que codées entropiquement à la suite de la sous-étape de codage C25 de la **figure 1****,** conformément au parcours raster scan précité,
- du pas de quantification QP₁,
- du nombre et de la position de ladite au moins une vue Vᵤ, dans le cas où ces paramètres ont été transmis dans le signal F₁,
- du paramètre Ptr₁ de transformation d'image, dans le cas où ce paramètre a été transmis dans le signal F₁,
- de l'information d'identification de chaque bloc prédicteur constituant la vue prédictrice Vpᵤ obtenue à la suite de la sous-étape de prédiction C21 du procédé de codage représenté à la **figure 1****,** une telle information consistant par exemple dans l'indice de chacun de ces blocs prédicteurs,
- d'autres informations relatives à la prédiction qui comprennent notamment le type de prédiction (inter ou intra), et le cas échéant, le mode de prédiction sélectionné, le type de partitionnement des blocs de la vue Vᵤ si ces derniers ont été subdivisés, l'indice de la vue de référence et le vecteur de déplacement utilisés dans le cas où un mode de prédiction inter a été sélectionné.

En référence à la **figure 6****,** parallèlement à la mise en oeuvre de l'étape d'identification D1a), il est procédé, au cours d'une étape D1b), à l'identification, dans ledit signal F₂ qui compose également le signal de données F :
- du paramètre pᵣₛₗ de résolution des micro-images de l'image intégrale courante IIⱼ qui a été codée, dans le cas où ce paramètre a été inséré dans le signal F₂,
- de l'ensemble des données associées à l'image intégrale résiduelle courante IIresⱼ, telles que codées entropiquement à la suite de la sous-étape de codage C75 de la **figure 1****,** conformément au parcours raster scan précité,
- du pas de quantification QP₂,
- du ou des paramètres Ptr₂, Ptr₃ de transformation d'image, dans le cas où ce ou ces paramètres ont été transmis dans le signal F,
- de l'information d'identification de chaque bloc prédicteur constituant l'image intégrale résiduelle prédictrice IIrespⱼ obtenue à la suite de la sous-étape de prédiction C71 du procédé de codage représenté à la **figure 1****,** une telle information consistant par exemple dans l'indice de chacun de ces blocs prédicteurs,
- d'autres informations relatives à la prédiction qui comprennent notamment le type de prédiction (inter ou intra), et le cas échéant, le mode de prédiction sélectionné, le type de partitionnement des blocs de l'image intégrale résiduelle IIresⱼ si ces derniers ont été subdivisés, l'indice de l'image intégrale de référence et le vecteur de déplacement utilisés dans le cas où un mode de prédiction inter a été sélectionné.

Les étapes d'identification D1a) et D1b) sont mises en oeuvre par un module MI_DO d'analyse de signal, tel que représenté à la **figure 5****,** ledit module étant piloté par le microprocesseur µP de l'unité de traitement UT_DO.

Selon l'invention, à la suite de l'étape D1a), il est procédé, au cours d'une étape D2 représentée à la **figure 6****,** au décodage de ladite au moins une vue Vᵤ codée entropiquement.

Une telle étape D2 est mise en oeuvre par un module logiciel de décodage de vues MDV_DO tel que représenté sur la **figure 5****,** lequel module est piloté par le microprocesseur µP de l'unité de traitement UT_DO.

Un tel module MDV_DO de décodage de vues comprend classiquement :
- un module MDE1_DO de décodage entropique, par exemple de type CABAC ("Context Adaptive Binary Arithmetic Coder" en anglais) ou encore un décodeur de Huffman connu en tant que tel,
- un module MQ1⁻¹_DO de déquantification,
- un module MT1⁻¹_DO de transformation inverse de type DCT⁻¹ (abréviation anglaise de « Discrete Cosine Transform »), DST⁻¹ (abréviation anglaise de « Discrete Sine Transform »), DWT⁻¹ (abréviation anglaise de « Discrete Wavelet Transform »),
- un module PRED1⁻¹_DO de prédiction inverse,
- un module CAL1⁻¹_DO de calcul de reconstruction de vue.

Au cours de l'étape de décodage D2, il est procédé à une sous-étape D21 de décodage entropique des données codées entropiquement associées à la vue Vᵤ, selon un ordre prédéterminé, tel que notamment l'ordre « raster scan ». Dans le mode préféré de réalisation, le décodage effectué est un décodage entropique de type arithmétique ou de Huffman. La sous-étape D21 consiste alors à :
- lire le ou les symboles d'un ensemble prédéterminé de symboles qui sont associés à chaque bloc quantifié de la vue Vᵤ,
- associer des informations numériques, telles que des bits, au(x) symbole(s) lu(s).

A l'issue de la sous-étape D21 précitée, est obtenue une pluralité d'informations numériques associées aux données quantifiées qui ont été codées au cours de l'étape de codage entropique C25 de la **figure 1****.**

Une telle sous-étape D21 de décodage entropique est mise en oeuvre par le module de décodage entropique MDE1_DO représenté sur la **figure 5****.**

Au cours de la sous-étape D21 précitée, est également décodé l'indice de chaque bloc prédicteur optimal qui a été utilisé pour prédire chaque bloc de la vue Vᵤ lors de la sous-étape C21 de la **figure 1****.** A l'issue de cette opération, chaque bloc prédicteur correspondant, qui est stocké dans la mémoire tampon TAMP_DO du décodeur DO de la **figure 5****,** est donc ainsi identifié. De tels blocs prédicteurs sont par exemple des blocs de pixels qui ont été déjà décodés ou non et qui ont été obtenus conformément au mode de prédiction sélectionné au codage de la vue Vᵤ.

L'étape de décodage D2 comprend également une sous-étape D22 au cours de laquelle il est procédé à la déquantification, à l'aide de la valeur du paramètre de quantification QP₁ décodée entropiquement, des informations numériques obtenues à la suite de la sous-étape D21, selon une opération classique de déquantification qui est l'opération inverse de la quantification mise en oeuvre lors la sous-étape de quantification C24 de la **figure 1****.** Un ensemble VDqᵤ de coefficients déquantifiés est alors obtenu à l'issue de la sous-étape D22. Une telle sous-étape D22 est effectuée au moyen du module de quantification MQ1⁻¹_DO, tel que représenté à la **figure 5****.**

L'étape de décodage D2 comprend également une sous-étape D23 au cours de laquelle il est procédé à une transformation de l'ensemble VDqᵤ de coefficients quantifiés qui est de type DCT⁻¹, DST⁻¹ ou DWT⁻¹. Cette transformation est l'opération inverse de la transformation effectuée à la sous-étape C23 de la **figure 1****.** A l'issue de la sous-étape D23, est obtenue une pluralité de blocs de données résiduelles décodés qui constituent la vue Vᵤ résiduelle décodée, désignée par la référence VDrᵤ. Une telle opération est effectuée par le module MT1⁻¹_DO représenté sur la **figure 5****.**

L'étape de décodage D2 comprend également une sous-étape D24 de prédiction de ladite vue Vᵤ à décoder, par sélection de la vue prédictrice optimale constituée des blocs prédicteurs optimaux obtenus à la suite de la sous-étape D21 précitée.

Une telle sous-étape D24 est mise en oeuvre par le module de prédiction PRED1⁻¹_DO représenté sur la **figure 5****.**

L'étape de décodage D2 comprend également une sous-étape de calcul D25, au cours de laquelle il est procédé à la construction de la vue décodée VDᵤ en ajoutant à chacun des blocs résidus décodés de la vue résiduelle décodée VDrᵤ obtenue à l'issue de la sous-étape D23, respectivement chacun des blocs prédicteurs correspondants qui ont été identifiés à la sous-étape D21 précitée.

Une telle sous-étape D25 est mise en oeuvre par le module de calcul CAL1⁻¹_DO représenté sur la **figure 5****.**

Selon l'invention, au cours d'une étape D3 représentée à la **figure 6****,** il est procédé à la recomposition de l'image intégrale courante IIⱼ à partir de ladite au moins une vue décodée VDᵤ. Une telle étape consiste à appliquer une décomposition inverse de ladite décomposition de l'image intégrale effectuée à l'étape de codage C1 de la **figure 1****,** en tenant compte de la valeur du paramètre de résolution pᵣₛₗ qui a été décodé entropiquement à l'étape D21 et de la position de ladite au moins une vue dans l'image intégrale courante IIⱼ. A la suite de l'étape D3, est obtenue une image intégrale recomposée décodée qui est notée IIDrecⱼ sur la **figure 6****.**

L'étape D3 est mise en oeuvre par un module logiciel MDCV⁻¹_DO de recomposition en vues, tel que représenté sur la **figure 5****,** ledit module étant piloté par le microprocesseur µP de l'unité de traitement UT_DO.

Au cours de l'étape D3 :
- soit le nombre de vues et la position de ces dernières sont décodées entropiquement dans le signal de données F₁, dans le cas où le codeur CO de la **figure 2** les a transmis dans le signal F₁,
- soit le nombre de vues et la position de ces dernières sont connus du décodeur DO de la **figure 5****.**

Dans le cas où le nombre de vues et la position de ces dernières sont connus du décodeur DO,
- selon un premier mode de réalisation, ces paramètres ont été sélectionnés au codage comme étant ceux qui optimisent un critère de performance de codage prédéterminé. Par exemple, le nombre et la position des vues sont sélectionnés par minimisation par exemple d'un critère débit distorsion bien connu de l'homme du métier qui a été appliqué à l'étape de codage C2 et à l'étape de codage C7 de la **figure 1****,**
- selon un deuxième mode de réalisation, ces paramètres ont été sélectionnés comme étant ceux qui minimisent le nombre de données associées à l'image intégrale résiduelle IIresⱼ obtenue à l'issue de l'étape C6 de la **figure 1****.**

L'image intégrale IIⱼ à décoder est alors recomposée en une ou plusieurs vues, comme représenté dans les exemples des **figures 4A** et **4B****.**

Selon l'invention, à la suite de l'étape D1b), il est procédé, au cours d'une étape D4 représentée à la **figure 6****,** au décodage en deux dimensions de l'image intégrale résiduelle courante IIresⱼ qui a été codée lors de l'étape C4 représentée à la **figure 1****.** Le type de décodage 2D effectué est conforme au type de codage 2D mis en oeuvre à l'étape C7 de la **figure 1****.**

Une telle étape D4 est mise en oeuvre par un module logiciel MDDI de décodage d'images, tel que représenté sur la **figure 5****,** lequel module est piloté par le microprocesseur µP de l'unité de traitement UT_DO.

De façon correspondante au module MDCI représenté sur la **figure 2****,** le module MDDI de décodage peut comprendre par exemple :
- un module MDE2_DO de décodage entropique, par exemple de type CABAC ("Context Adaptive Binary Arithmetic Coder" en anglais) ou encore un décodeur de Huffman connu en tant que tel,
- un module MQ2⁻¹_DO de déquantification,
- un module MT2⁻¹_DO de transformation inverse de type DCT (abréviation anglaise de « Discrete Cosine Transform »), DST (abréviation anglaise de « Discrete Sine Transform »), DWT (abréviation anglaise de « Discrete Wavelet Transform »),
- un module PRED2⁻¹_DO de prédiction inverse,
- un module CAL2⁻¹_DO de calcul de reconstruction d'image intégrale.

Au cours de l'étape de décodage D4, il est procédé à une sous-étape D41 de décodage entropique des données codées entropiquement associées à l'image intégrale résiduelle courante IIresⱼ telles qu'obtenues à la suite de la sous-étape C75 de la **figure 1****.** Une telle sous-étape D41 est effectuée selon un ordre prédéterminé, tel que notamment l'ordre « raster scan ». Dans le mode préféré de réalisation, le décodage effectué est un décodage entropique de type arithmétique ou de Huffman. La sous-étape D41 consiste alors à :
- lire le ou les symboles d'un ensemble prédéterminé de symboles qui sont associés à chaque bloc quantifié de l'image intégrale résiduelle courante IIresⱼ,
- associer des informations numériques, telles que des bits, au(x) symbole(s) lu(s).

A l'issue de la sous-étape D41 précitée, est obtenue une pluralité d'informations numériques associées aux données quantifiées qui ont été codées au cours de l'étape de codage entropique C75 de la **figure 1****.**

Une telle sous-étape D41 de décodage entropique est mise en oeuvre par le module de décodage entropique MDE2_DO représenté sur la **figure 5****.**

Au cours de la sous-étape D41 précitée, est également décodé l'indice de chaque bloc prédicteur optimal qui a été utilisé pour prédire chaque bloc de l'image intégrale résiduelle courante IIresⱼ lors de la sous-étape C71 de la **figure 1****.** A l'issue de cette opération, chaque bloc prédicteur correspondant, qui est stocké dans la mémoire tampon TAMP_DO du décodeur DO de la **figure 5****,** est donc ainsi identifié. De tels blocs prédicteurs sont par exemple des blocs de pixels qui ont été déjà décodés ou non et qui ont été obtenus conformément au mode de prédiction sélectionné au codage de l'image intégrale résiduelle courante IIresⱼ.

L'étape de décodage D4 comprend également une sous-étape D42 au cours de laquelle il est procédé à la déquantification, à l'aide de la valeur du paramètre de quantification QP₂ décodée entropiquement, des informations numériques obtenues à la suite de la sous-étape D41, selon une opération classique de déquantification qui est l'opération inverse de la quantification mise en oeuvre lors la sous-étape de quantification C74 de la **figure 1****.** Un ensemble IIDresqⱼ de coefficients déquantifiés est alors obtenu à l'issue de la sous-étape D42. Une telle sous-étape D42 est effectuée au moyen du module de quantification MQ2⁻¹_DO, tel que représenté à la **figure 5****.**

L'étape de décodage D4 comprend également une sous-étape D43 au cours de laquelle il est procédé à une transformation de l'ensemble IIDresqⱼ de coefficients quantifiés qui est de type DCT⁻¹, DST⁻¹ ou DWT⁻¹. Cette transformation est l'opération inverse de la transformation effectuée à la sous-étape C73 de la **figure 1****.** A l'issue de la sous-étape D43, est obtenue une pluralité de blocs de données résiduels décodés qui constituent l'image intégrale résiduelle décodée, désignée par la référence IIDresrⱼ. Une telle opération est effectuée par le module MT2⁻¹_DO représenté sur la **figure 5****.**

L'étape de décodage D4 comprend également une sous-étape D44 de prédiction de ladite image intégrale résiduelle IIresⱼ à décoder, par sélection de l'image intégrale résiduelle prédictrice optimale constituée des blocs prédicteurs optimaux obtenus à la suite de la sous-étape D41 précitée.

Une telle sous-étape D44 est mise en oeuvre par le module de prédiction PRED2⁻¹_DO représenté sur la **figure 5****.**

L'étape de décodage D4 comprend également une sous-étape de calcul D45, au cours de laquelle il est procédé à la construction de l'image intégrale résiduelle décodée IIDresⱼ en ajoutant à chacun des blocs résidus décodés de l'image intégrale résiduelle décodée IIDresrⱼ obtenue à l'issue de la sous-étape D43, respectivement chacun des blocs prédicteurs correspondants qui ont été identifiés à la sous-étape D41 précitée.

Une telle sous-étape D45 est mise en oeuvre par le module de calcul CAL2⁻¹_DO représenté sur la **figure 5****.**

Selon l'invention, au cours d'une étape D5 représentée sur la **figure 6****,** il est procédé au calcul de la somme de l'image intégrale recomposée décodée IIDrecⱼ qui a été obtenue à l'issue de l'étape D3 précitée et de l'image intégrale résiduelle décodée IIDresⱼ qui a été obtenue à l'issue de la sous-étape D45.

A l'issue de l'étape D5, une image intégrale décodée courante IIDⱼ est alors obtenue.

Une telle étape D5 est mise en oeuvre par un module logiciel de calcul CAL3⁻¹_DO représenté sur la **figure 5****.**

En variante au mode de réalisation qui vient d'être décrit ci-dessus, comme illustré sur la **figure 6****,** il est procédé en outre:
- directement à la suite de l'étape D2 de décodage de ladite au moins une vue, à une étape DI1 et/ou DI2 de transformation de ladite vue reconstruite VDᵤ qui est la transformation inverse respectivement de l'étape de transformation CI1 et/ou CI2 effectuée au codage, et/ou
- directement à la suite de l'étape D3 de recomposition de l'image intégrale décodée courante, à une étape DI3 de transformation de l'image intégrale décodée courante recomposée IIDrecⱼ qui est la transformation inverse de l'étape de transformation CI3 effectuée au codage,

Dans une variante préférée, seule ladite étape de transformation DI2 est appliquée à l'aide du paramètre de transformation pₜᵣ₂, car elle permet d'obtenir une recomposition de l'image intégrale décodée courante qui est la plus efficace.

Lesdites étapes de transformation étant optionnelles, elles sont représentées en pointillé sur la **figure 6****.**

Les étapes de transformation DI1, DI2, DI3 sont respectivement mises en oeuvre par des modules logiciels de transformation TR1_DO, TR2_DO et TR3_DO, tels que représentés en pointillé sur la **figure 5****.**

Chacune des étapes de transformation DI1, DI2 et DI3 utilise un paramètre de transformation correspondant Ptr₁, Ptr₂, Ptr₃.

Au cours de chacune de ces étapes DI1, DI2, DI3 :
- soit le ou les paramètres Ptr₁, Ptr₂, Ptr₃ sont décodés entropiquement soit au cours de l'étape D21, soit au cours de l'étape D41, dans le cas où le codeur CO de la **figure 2** les a transmis dans les signaux F₁ et F₂,
- soit le ou les paramètres Ptr₁, Ptr₂, Ptr₃ sont connus du décodeur DO de la **figure 5****.**

Dans le cas où le ou les paramètres Ptr₁, Ptr₂, Ptr₃ sont connus du décodeur DO :
- selon un premier mode de réalisation, ces paramètres ont été sélectionnés au codage comme étant ceux qui optimisent un critère de performance de codage prédéterminé. Par exemple, le ou les paramètres Ptr₁, Ptr₂, Ptr₃ sont sélectionnés par minimisation par exemple d'un critère débit distorsion bien connu de l'homme du métier qui a été appliqué à l'étape de codage C2 et à l'étape de codage C7 de la **figure 1****,**
- selon un deuxième mode de réalisation, le ou les paramètres Ptr₁, Ptr₂, Ptr₃ ont été sélectionnés comme étant ceux qui minimisent le nombre de données associées à l'image intégrale résiduelle IIresⱼ obtenue à l'issue de l'étape C6 de la **figure 1****.**

## Revendications

1. Procédé de codage d'au moins une image intégrale courante (IIⱼ) capturée par un dispositif de capture d'images, comprenant les étapes suivantes :
- décomposer (C1) l'image intégrale courante en au moins une vue (Vᵤ) représentant une perspective donnée d'une scène et à partir d'au moins un paramètre de capture d'image associé au dispositif de capture d'images,
- coder (C2) ladite au moins une vue,
- décoder (C4) ladite au moins vue,
- recomposer (C5) l'image intégrale courante à partir de ladite au moins une vue décodée par application d'une décomposition inverse de ladite décomposition de l'image intégrale et à partir dudit au moins un paramètre de capture d'image associé au dispositif de capture d'images.
**caractérisé en ce que** le procédé comprend aussi les étapes suivantes:
- déterminer (C6) une image intégrale résiduelle (IIresⱼ) par comparaison de ladite au moins une image intégrale courante avec ladite image intégrale recomposée,
- coder (C7) les données associées à l'image intégrale résiduelle et ledit au moins un paramètre de capture d'image associé au dispositif de capture d'images.

2. Procédé de codage selon la revendication 1, comprenant :
- une étape (C3) d'élaboration d'un premier signal (F₁) de données contenant des données issues du codage de ladite au moins une vue,
- une étape (C8) d'élaboration d'un deuxième signal (F₂) de données contenant les données associées à l'image intégrale résiduelle codée,
ledit au moins un paramètre de capture d'image associé au dispositif de capture d'images étant contenu soit dans le premier signal, soit dans le deuxième signal, soit dans un autre signal de données à élaborer.

3. Procédé de codage selon la revendication 1 ou la revendication 2, au cours duquel le nombre et la position des vues à coder de l'image intégrale courante sont sélectionnés comme étant ceux qui optimisent un critère de performance de codage prédéterminé.

4. Procédé de codage selon la revendication 3, au cours duquel le nombre et la position des vues de l'image intégrale courante sont sélectionnés comme étant ceux qui minimisent le nombre de données associées à l'image intégrale résiduelle.

5. Procédé de codage selon la revendication 1 ou la revendication 2, au cours duquel il est procédé à une sélection d'une valeur d'un premier paramètre de quantification (QP₁) à appliquer au cours de l'étape de codage (C2) de ladite au moins une vue et à une sélection d'une valeur d'un deuxième paramètre de quantification (QP₂) à appliquer au cours de l'étape de codage (C7) des données associées à l'image intégrale résiduelle, lesdites valeurs étant sélectionnées comme optimisant un critère de performance de codage prédéterminé.

6. Procédé de codage selon l'une quelconque des revendications 1 à 5, comprenant en outre une étape (CI1 ; CI2 ; CI3) de modification d'image qui est appliquée:
- entre l'étape (C1) de décomposition de l'image intégrale courante en ladite au moins une vue et l'étape (C2) de codage de ladite au moins une vue, et/ou
- entre l'étape (C4) de décodage de ladite au moins une vue et l'étape (C5) de recomposition de l'image intégrale courante, et/ou
- entre l'étape (C5) de recomposition de l'image intégrale courante et l'étape (C6) de détermination de l'image intégrale résiduelle.

7. Procédé de codage selon la revendication 6, au cours duquel ladite étape de modification est mise en oeuvre à l'aide d'un paramètre (pₜᵣ₁ ; pₜᵣ₂ ; pₜᵣ₃) de modification qui est sélectionné comme optimisant un critère de performance de codage prédéterminé ou bien comme minimisant le nombre de données associées à l'image intégrale résiduelle.

8. Dispositif de codage d'au moins une image intégrale (courante (IIⱼ) capturée par un dispositif de capture d'images, comprenant :
- des premiers moyens (MDCV_CO) de traitement pour décomposer l'image intégrale courante en au moins une vue représentant une perspective donnée d'une scène et à partir d'au moins un paramètre de capture d'image associé au dispositif de capture d'images,
- des premiers moyens (MCV_CO) de codage pour coder ladite au moins une vue,
- des moyens (MDV_CO) de décodage pour décoder ladite au moins une vue,
- des deuxièmes moyens (MDCV⁻¹_CO) de traitement pour recomposer l'image intégrale courante à partir de ladite vue décodée, par application d'une décomposition inverse de ladite décomposition de l'image intégrale et à partir dudit au moins un paramètre de capture d'image associé au dispositif de capture d'images,
**caractérisé en ce que** le dispositif comprend aussi:
- des moyens (CAL2_CO) de calcul pour déterminer une image intégrale résiduelle par comparaison de ladite au moins une image intégrale courante avec ladite image intégrale recomposée,
- des deuxièmes moyens (MDCI) de codage pour coder les données associées à l'image intégrale résiduelle et ledit au moins un paramètre de capture d'image associé au dispositif de capture d'images.

9. Programme d'ordinateur comportant des instructions qui implémentent le procédé de codage selon l'une quelconque des revendications 1 à 7, lorsqu'il est exécuté sur un ordinateur.

10. Procédé de décodage d'un signal (F) de données représentatif d'au moins une image intégrale courante (IIⱼ) acquise par un dispositif de capture d'images et qui a été précédemment codée, ledit procédé comprenant les étapes suivantes :
- identifier (D1a) dans le signal de données au moins un paramètre de capture d'image associé au dispositif de capture d'image,
- décoder (D2) au moins une vue de ladite image intégrale courante à partir dudit au moins un paramètre de capture d'image identifié, ladite au moins une vue représentant une perspective donnée d'une scène,
- recomposer (D3) une image intégrale en tant que prédicteur de l'image intégrale courante, à partir de ladite au moins une vue décodée et à partir dudit au moins un paramètre de capture d'image associé au dispositif de capture d'images,
**caractérisé en ce que** le procédé comprend aussi les étapes suivantes:
- décoder (D4) des données codées représentatives de la différence entre ladite au moins une image intégrale courante et l'image intégrale recomposée,
- reconstruire (D5) l'image intégrale courante à partir de ladite image intégrale recomposée et des données décodées représentatives de ladite différence.

11. Procédé de décodage selon la revendication 10, au cours duquel l'étape de recomposition de ladite image intégrale courante est mise en oeuvre à l'aide d'un paramètre de position de ladite au moins une vue décodée dans l'image intégrale courante à décoder, ledit paramètre de position étant prédéterminé ou bien lu dans ledit signal de données.

12. Procédé de décodage selon la revendication 10 ou la revendication 11, au cours duquel :
- l'étape de décodage de ladite au moins une vue comprend la mise en oeuvre d'une étape (D22) de déquantification à partir d'un premier paramètre de quantification dont la valeur est identifiée dans ledit signal de données,
- l'étape de décodage des données codées représentatives de la différence entre ladite au moins image intégrale courante et l'image intégrale recomposée comprend la mise en oeuvre d'une étape (D42) de déquantification à partir d'un deuxième paramètre de quantification dont la valeur est identifiée dans ledit signal de données.

13. Procédé de décodage selon l'une quelconque des revendications 10 à 12, comprenant en outre une étape (DI1 ; DI2 ; DI3) de modification d'image à partir d'un paramètre de modification prédéterminé ou bien lu dans le signal de données, ladite étape de modification étant appliquée:
- entre l'étape (D2) de décodage de ladite au moins une vue et l'étape (D3) de recomposition de l'image intégrale courante en tant que prédicteur de l'image intégrale courante, et/ou
- entre l'étape (D3) de recomposition de l'image intégrale courante en tant que prédicteur de l'image intégrale courante et l'étape (D4) de reconstruction de l'image intégrale courante.

14. Dispositif (DO) de décodage d'un signal de données représentatif d'au moins une image intégrale courante (IIⱼ) acquise par un dispositif de capture d'images et qui a été précédemment codée, le dispositif de décodage comprenant :
- des moyens (MI_DO) d'analyse pour identifier dans le signal de données au moins un paramètre de capture d'image associé au dispositif de capture d'image,
- des premiers moyens (MDV_DO) de décodage pour décoder au moins une vue de ladite image intégrale courante à partir dudit au moins un paramètre de capture d'images identifié, ladite au moins une vue représentant une perspective donnée d'une scène,
- des moyens (MDCV⁻¹_DO) de traitement pour recomposer une image intégrale en tant que prédicteur de l'image intégrale courante, à partir de ladite vue décodée et à partir dudit au moins un paramètre de capture d'image associé au dispositif de capture d'images,
**caractérisé en ce que** le dispositif comprend aussi:
- des deuxièmes moyens (MDDI) de décodage pour décoder des données codées représentatives de la différence entre ladite au moins une image intégrale courante et l'image intégrale recomposée,
- des moyens (CAL3⁻¹_DO) de reconstruction pour reconstruire l'image intégrale courante à partir de ladite image intégrale recomposée et des données décodées représentatives de ladite différence.

15. Programme d'ordinateur comportant des instructions qui implémentent le procédé de décodage selon l'une quelconque des revendications 10 à 13, lorsqu'il est exécuté sur un ordinateur.

## Patentansprüche

1. Verfahren zur Codierung mindestens eines aktuellen integralen Bildes (IIⱼ), das von einer Bilderfassungsvorrichtung erfasst wird, umfassend die folgenden Schritte:
- Zerlegen (C1) des aktuellen integralen Bildes in mindestens eine Ansicht (Vᵤ), die eine gegebene Perspektive einer Szene darstellt, und auf Basis von mindestens einem Bilderfassungsparameter, der der Bilderfassungsvorrichtung zugeordnet ist,
- Codieren (C2) der mindestens einen Ansicht,
- Decodieren (C4) der mindestens einen Ansicht,
- neuerliches Zusammenstellen (C5) des aktuellen integralen Bildes auf Basis der mindestens einen decodierten Ansicht durch Anwendung einer inversen Zerlegung der Zerlegung des integralen Bildes und auf Basis des mindestens einen Bilderfassungsparameters, der der Bilderfassungsvorrichtung zugeordnet ist,
**dadurch gekennzeichnet, dass** das Verfahren auch die folgenden Schritte umfasst:
- Bestimmen (C6) eines integralen Restbildes (IIresⱼ) durch Vergleich des mindestens einen aktuellen integralen Bildes mit dem wieder zusammengestellten integralen Bild,
- Codieren (C7) der dem integralen Restbild zugeordneten Daten und des mindestens einen Bilderfassungsparameters, der der Bilderfassungsvorrichtung zugeordnet ist.

2. Codierungsverfahren nach Anspruch 1, umfassend:
- einen Schritt (C3) der Ausarbeitung eines ersten Datensignals (F₁), das aus der Codierung der mindestens einen Ansicht stammende Daten enthält,
- einen Schritt (C8) der Ausarbeitung eines zweiten Datensignals (F₂), das die dem codierten integralen Restbild zugeordneten Daten enthält,
wobei der mindestens eine Bilderfassungsparameter, der der Bilderfassungsvorrichtung zugeordnet ist, entweder in dem ersten Signal oder in dem zweiten Signal oder in einem anderen auszuarbeitenden Datensignal enthalten ist.

3. Codierungsverfahren nach Anspruch 1 oder Anspruch 2, während dessen die Anzahl und die Position der zu codierenden Ansichten des aktuellen integralen Bildes derart ausgewählt werden, dass sie ein vorbestimmtes Codierungsleistungskriterium optimieren.

4. Codierungsverfahren nach Anspruch 3, während dessen die Anzahl und die Position der Ansichten des aktuellen integralen Bildes derart ausgewählt werden, dass sie die Anzahl von dem integralen Restbild zugeordneten Daten minimieren.

5. Codierungsverfahren nach Anspruch 1 oder Anspruch 2, während dessen eine Auswahl eines Werts eines ersten Quantifizierungsparameters (QP₁), der während des Codierungsschritts (C2) der mindestens einen Ansicht anzuwenden ist, und eine Auswahl eines Werts eines zweiten Quantifizierungsparameters (QP₂) vorgenommen wird, der während des Codierungsschritts (C7) der dem integralen Restbild zugeordneten Daten anzuwenden ist, wobei die Werte derart gewählt sind, dass sie ein vorbestimmtes Codierungsleistungskriterium optimieren.

6. Codierungsverfahren nach einem der Ansprüche 1 bis 5, ferner umfassend einen Schritt (CI1; CI2; CI3) der Änderung eines Bildes, der angewandt wird:
- zwischen dem Schritt (C1) der Zerlegung des aktuellen integralen Bildes in die mindestens eine Ansicht und dem Schritt (C2) der Codierung der mindestens einen Ansicht, und/oder
- zwischen dem Schritt (C4) der Decodierung der mindestens einen Ansicht und dem Schritt (C5) der neuerlichen Zusammenstellung des aktuellen integralen Bildes, und/oder
- zwischen dem Schritt (C5) der neuerlichen Zusammenstellung des aktuellen integralen Bildes und dem Schritt (C6) der Bestimmung des integralen Restbildes.

7. Codierungsverfahren nach Anspruch 6, während dessen der Änderungsschritt mit Hilfe eines Änderungsparameters (pₜᵣ₁; pₜᵣ₂; pₜᵣ₃) eingesetzt wird, der derart gewählt ist, dass ein vorbestimmtes Codierungsleistungskriterium optimiert oder auch, dass die Anzahl von dem integralen Restbild zugeordneten Daten minimiert wird.

8. Vorrichtung zur Codierung mindestens eines aktuellen integralen Bildes (IIⱼ), das von einer Bilderfassungsvorrichtung erfasst wird, umfassend:
- erste Bearbeitungsmittel (MDCV_CO) zum Zerlegen des aktuellen integralen Bildes in mindestens eine Ansicht, die eine gegebene Perspektive einer Szene darstellt, und auf Basis von mindestens einem Bilderfassungsparameter, der der Bilderfassungsvorrichtung zugeordnet ist,
- erste Mittel (MCV_CO) zum Codieren der mindestens einen Ansicht,
- Mittel (MDV_CO) zum Decodieren der mindestens einen Ansicht,
- zweite Bearbeitungsmittel (MDCV⁻¹_CO) zum neuerlichen Zusammenstellen des aktuellen integralen Bildes auf Basis der decodierten Ansicht durch Anwendung einer inversen Zerlegung der Zerlegung des integralen Bildes und auf Basis des mindestens einen Bilderfassungsparameters, der der Bilderfassungsvorrichtung zugeordnet ist,
**dadurch gekennzeichnet, dass** die Vorrichtung auch umfasst:
- Berechnungsmittel (CAL2_CO) zum Bestimmen eines integralen Restbildes durch Vergleich des mindestens einen aktuellen integralen Bildes mit dem wieder zusammengestellten integralen Bild,
- zweite Codierungsmittel (MDCI) zum Codieren der dem integralen Restbild zugeordneten Daten und des mindestens einen Bilderfassungsparameters, der der Bilderfassungsvorrichtung zugeordnet ist.

9. Computerprogramm, umfassend Anweisungen, die das Codierungsverfahren nach einem der Ansprüche 1 bis 7 implementieren, wenn es auf einem Computer ausgeführt wird.

10. Verfahren zur Decodierung eines Datensignals (F), das für mindestens ein aktuelles integrales Bild (IIⱼ) repräsentativ ist, das von einer Bilderfassungsvorrichtung erfasst und vorher codiert wurde, wobei das Verfahren die folgenden Schritte umfasst:
- in dem Datensignal Identifikation (D1a) mindestens eines Bilderfassungsparameters, der der Bilderfassungsvorrichtung zugeordnet ist,
- Decodieren (D2) mindestens einer Ansicht des aktuellen integralen Bildes auf Basis des mindestens einen identifizierten Bilderfassungsparameters, wobei die mindestens eine Ansicht eine gegebene Perspektive einer Szene darstellt,
- neuerliches Zusammenstellen (D3) eines integralen Bildes als Prädiktor eines aktuellen integralen Bildes auf Basis der mindestens einen decodierten Ansicht und auf Basis des mindestens einen Bilderfassungsparameters, der der Bilderfassungsvorrichtung zugeordnet ist,
**dadurch gekennzeichnet, dass** das Verfahren auch die folgenden Schritte umfasst:
- Decodieren (D4) der codierten Daten, die für den Unterschied zwischen dem mindestens einen aktuellen integralen Bild und dem neuerlich zusammengestellten integralen Bild repräsentativ sind,
- Rekonstruieren (D5) des aktuellen integralen Bildes auf Basis des neuerlich zusammengestellten integralen Bildes und der für den Unterschied repräsentativen decodierten Daten.

11. Decodierungsverfahren nach Anspruch 10, während dessen der Schritt des neuerlichen Zusammenstellens des aktuellen integralen Bildes mit Hilfe eines Positionsparameters der mindestens einen decodierten Ansicht in dem zu decodierenden aktuellen integralen Bild eingesetzt wird, wobei der Positionsparameter vorbestimmt ist oder auch aus dem Datensignal abgelesen wird.

12. Decodierungsverfahren nach Anspruch 10 oder Anspruch 11, während dessen:
- der Schritt der Decodierung der mindestens einen Ansicht den Einsatz eines Schrittes (D22) der Dequantifizierung auf Basis eines ersten Quantifizierungsparameters, dessen Wert in dem Datensignal identifiziert wird, umfasst,
- der Schritt der Decodierung der codierten Daten, die für den Unterschied zwischen dem mindestens einen aktuellen integralen Bild und dem neuerlich zusammengestellten integralen Bild repräsentativ sind, den Einsatz eines Schrittes (D42) der Dequantifizierung auf Basis eines zweiten Quantifizierungsparameters, dessen Wert in dem Datensignal identifiziert wird, umfasst.

13. Decodierungsverfahren nach einem der Ansprüche 10 bis 12, ferner umfassend einen Schritt (DI1; DI2; DI3) der Änderung eines Bildes auf Basis eines vorbestimmten oder auch aus dem Datensignal abgelesenen Änderungsparameters, wobei der Änderungsschritt angewandt wird:
- zwischen dem Schritt (D2) der Decodierung der mindestens einen Ansicht und dem Schritt (D3) der neuerlichen Zusammenstellung des aktuellen integralen Bildes als Prädiktor des aktuellen integralen Bildes, und/oder
- zwischen dem Schritt (D3) der neuerlichen Zusammenstellung des aktuellen integralen Bildes als Prädiktor des aktuellen integralen Bildes und dem Schritt (D4) der Rekonstruktion des aktuellen integralen Bildes.

14. Vorrichtung (DO) zur Decodierung eines Datensignals, das für mindestens ein aktuelles integrales Bild (IIⱼ) repräsentativ ist, das von einer Bilderfassungsvorrichtung erfasst und vorher codiert wurde, wobei die Decodierungsvorrichtung umfasst:
- Analysemittel (MI_DO) zur Identifikation mindestens eines Bilderfassungsparameters, der der Bilderfassungsvorrichtung zugeordnet ist, in dem Datensignal,
- erste Decodierungsmittel (MDV_DO) zum Decodieren mindestens einer Ansicht des aktuellen integralen Bildes auf Basis des mindestens einen identifizierten Bilderfassungsparameters, wobei die mindestens eine Ansicht eine gegebene Perspektive einer Szene darstellt,
- Bearbeitungsmittel (MDCV⁻¹_DO) zum neuerlichen Zusammenstellen eines integralen Bildes als Prädiktor eines aktuellen integralen Bildes auf Basis der mindestens einen decodierten Ansicht und auf Basis des mindestens einen Bilderfassungsparameters, der der Bilderfassungsvorrichtung zugeordnet ist,
**dadurch gekennzeichnet, dass** die Vorrichtung auch umfasst:
- zweite Decodierungsmittel (MDDI) zum Decodieren der codierten Daten, die für den Unterschied zwischen dem mindestens einen aktuellen integralen Bild und dem neuerlich zusammengestellten integralen Bild repräsentativ sind,
- Rekonstruktionsmittel (CAL3⁻¹_DO) zum Rekonstruieren des aktuellen integralen Bildes auf Basis des neuerlich zusammengestellten integralen Bildes und der für den Unterschied repräsentativen decodierten Daten.

15. Computerprogramm, umfassend Anweisungen, die das Decodierungsverfahren nach einem der Ansprüche 10 bis 13 implementieren, wenn es auf einem Computer ausgeführt wird.

## Claims

1. Method for coding at least one current integral image (IIⱼ) captured by an image capture device, comprising the following steps:
- decompose (C1) the current integral image into at least one view (Vᵤ) representing a given perspective of a scene and based on at least one image capture parameter associated with the image capture device,
- code (C2) said at least one view,
- decode (C4) said at least one view,
- re-compose (C5) the current integral image starting from said at least one view decoded by application of an inverse decomposition of said decomposition of the integral image and based on said at least one image capture parameter associated with the image capture device, **characterized in that** the method also comprises the following steps:
- determine (C6) a residual integral image (IIresⱼ) by comparison of said at least one current integral image with said re-composed integral image,
- code (C7) the data associated with the residual integral image and said at least one image capture parameter associated with the image capture device.

2. Coding method according to Claim 1, comprising:
- a step (C3) for generating a first data signal (F₁) containing data coming from the coding of said at least one view,
- a step (C8) for generating a second data signal (F₂) containing the data associated with the coded residual integral image, said at least one image capture parameter associated with the image capture device being contained either in the first signal or in the second signal, or in another data signal to be generated.

3. Coding method according to either of Claims 1 and 2, during which the number and the position of the views to be coded from the current integral image are selected as being those which optimize a predetermined coding performance criterion.

4. Coding method according to Claim 3, during which the number and the position of the views of the current integral image are selected as being those which minimize the number of data values associated with the residual integral image.

5. Coding method according to either of Claims 1 and 2, during which a selection is carried out of a value of a first quantification parameter (QP₁) to be applied during the step (C2) for coding said at least one view and a selection is carried out of a value of a second quantification parameter (QP₂) to be applied during the step (C7) for coding data associated with the residual integral image, said values being selected as optimizing a predetermined coding performance criterion.

6. Coding method according to any one of Claims 1 to 5, furthermore comprising an image modification step (CI1 ; CI2 ; CI3) which is applied:
- between the step (C1) for decomposition of the current integral image into said at least one view and the step (C2) for coding said at least one view, and/or
- between the step (C4) for decoding said at least one view and the step (C5) for re-composition of the current integral image, and/or
- between the step (C5) for re-composition of the current integral image and the step (C6) for determination of the residual integral image.

7. Coding method according to Claim 6, during which said modification step is implemented using a modification parameter (Pₜᵣ₁ ; Pₜᵣ₂ ; Pₜᵣ₃) which is selected as optimizing a predetermined coding performance criterion or else as minimizing the number of data values associated with the residual integral image.

8. Device for coding at least one (current (IIⱼ)) integral image captured by an image capture device, comprising:
- first processing means (MDCV_CO) for decomposing the current integral image into at least one view representing a given perspective of a scene and based on at least one image capture parameter associated with the image capture device,
- first coding means (MCV_CO) for coding said at least one view,
- decoding means (MDV_CO) for decoding said at least one view,
- second processing means (MDCV⁻¹_CO) for re-composing the current integral image starting from said decoded view, by application of an inverse decomposition of said decomposition of the integral image and using said at least one image capture parameter associated with the image capture device, **characterized in that** the device also comprises:
- calculation means (CAL2_CO) for determining a residual integral image by comparison of said at least one current integral image with said re-composed integral image,
- second coding means (MDCI) for coding the data associated with the residual integral image and said at least one image capture parameter associated with the image capture device.

9. Computer program comprising instructions which implement the coding method according to any one of Claims 1 to 7, when it is executed on a computer.

10. Method for decoding a data signal (F) representative of at least one current integral image (IIⱼ) acquired by an image capture device and which has previously been coded, said method comprising the following steps:
- identify (D1a) in the data signal at least one image capture parameter associated with the image capture device,
- decode (D2) at least one view of said current integral image using said at least one identified image capture parameter, said at least one view representing a given perspective of a scene,
- re-compose (D3) an integral image as a predictor of the current integral image, starting from said at least one decoded view and using said at least one image capture parameter associated with the image capture device, **characterized in that** the method also comprises the following steps:
- decode (D4) coded data representative of the difference between said at least one current integral image and the re-composed integral image,
- re-construct (D5) the current integral image starting from said re-composed integral image and from the decoded data representative of said difference.

11. Decoding method according to Claim 10, during which the step for re-composition of said current integral image is implemented using a position parameter of said at least one decoded view in the current integral image to be decoded, said position parameter being predetermined or else read in said data signal.

12. Decoding method according to either of Claims 10 and 11, during which:
- the step for decoding said at least one view comprises the implementation of a de-quantification step (D22) based on a first quantification parameter whose value is identified within said data signal,
- the step for decoding the coded data representative of the difference between said at least one current integral image and the re-composed integral image comprises the implementation of a de-quantification step (D42) based on a second quantification parameter whose value is identified within said data signal.

13. Decoding method according to any one of Claims 10 to 12, furthermore comprising a step (DI1 ; DI2 ; DI3) for image modification based on a modification parameter that is predetermined or else read in the data signal, said modification step being applied:
- between the step (D2) for decoding said at least one view and the step (D3) for re-composition of the current integral image as a predictor of the current integral image, and/or
- between the step (D3) for re-composition of the current integral image as a predictor of the current integral image and the step (D4) for re-construction of the current integral image.

14. Device (DO) for decoding a data signal representative of at least one current integral image (IIⱼ) acquired by an image capture device and which has been previously coded, the decoding device comprising:
- analysis means (MI_DO) for identifying within the data signal at least one image capture parameter associated with the image capture device,
- first decoding means (MDV_DO) for decoding at least one view of said current integral image using said at least one identified image capture parameter, said at least one view representing a given perspective of a scene,
- processing means (MDCV⁻¹_DO) for re-composing an integral image as a predictor of the current integral image, starting from said decoded view and using said at least one image capture parameter associated with the image capture device, **characterized in that** the device also comprises:
- second decoding means (MDDI) for decoding coded data representative of the difference between said at least one current integral image and the re-composed integral image,
- re-construction means (CAL3₋₁_DO) for re-constructing the current integral image starting from said re-composed integral image and from the decoded data representative of said difference.

15. Computer program comprising instructions which implement the decoding method according to any one of Claims 10 to 13, when it is executed on a computer.
